Europäisches Patentamt

European Patent Office

Office européen des brevets

(19)

(11) **EP 1 411 506 A2**

(12) **EUROPEAN PATENT APPLICATION**

(43) Date of publication:
**21.04.2004 Bulletin 2004/17**

(51) Int Cl.$^7$: **G11B 7/135**

(21) Application number: **03256408.0**

(22) Date of filing: **10.10.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK**<br><br>(30) Priority: **18.10.2002 JP 2002303683**<br>          **31.01.2003 JP 2003023038**<br>          **22.04.2003 JP 2003117207**<br><br>(71) Applicant: **KONICA MINOLTA HOLDINGS, INC.**<br>**Tokyo 100-0005 (JP)** | (72) Inventor: **Ikenaka, Kiyono, Konica Opto**<br>**Corporation**<br>**Hachioji-shi Tokyo 192-8505 (JP)**<br><br>(74) Representative: **Nicholls, Michael John**<br>**J.A. KEMP & CO.**<br>**14, South Square**<br>**Gray's Inn**<br>**London WC1R 5JJ (GB)** |

(54) **Optical element and optical pickup device**

(57)     An optical element (OBL) is for use in an optical pickup apparatus which comprises first, second and third light source (AL,DHL,CHL) having a wavelength $\lambda 1$, $\lambda 2$ ($\lambda 1 < \lambda 2$), and $\lambda 3$ ($1.6 \cdot \lambda 1 \leq \lambda 3 \leq 2.0 \cdot \lambda 1$ and $\lambda 2 < \lambda 3$) and a light converging system including the optical element. The light converging system converges a light flux from the first light source (AL) onto a first optical information recording medium through a protective layer having a thickness t1, converges a light flux from the second light source (DHL) onto a second optical information recording medium through a protective layer having a thickness t2 ($0.8 \cdot t1 \leq t2 \leq 1.2 \cdot t1$), and converges a light flux from the third light source (CHL) onto a third optical information recording medium through a protective layer having a thickness t3 ($1.9 \cdot t1 \leq t3 \leq 2.1 \cdot t1$).

FIG. 3

EP 1 411 506 A2

**Description**

**BACKGROUND OF THE INVENTION**

The present invention relates to an optical element for use in an optical pickup apparatus, a coupling lens and to the optical pickup apparatus, and in particular, to an optical element for use in an optical pickup apparatus capable of conducting recording and/or reproducing of information for each of three different optical information recording media by using a light flux emitted from each of three light sources each having a different light source wavelength, the coupling lens and to the optical pickup apparatus.

In recent years, with practical use of a red semiconductor laser with a short wavelength, there has been developed and commercialized a DVD (digital versatile disc) representing a high density optical disc having a size identical to that of CD (compact disc) representing a conventional optical disc (which is also called an optical information recording medium) and having a larger capacity, and it is estimated that a high density next-generation optical disc may appear in the near future. In a light-converging optical system of an optical information recording and reproducing device (which is also called on optical pickup apparatus) employing the next-generation optical disc as a medium, it is required that a diameter of a spot formed through light converging on an information recording surface through an objective lens is made to be small for the purpose of achieving high density of recording signals or for the purpose of reproducing high density recording signals. For that purpose, it is necessary to make a wavelength of a laser representing a light source to be short, and to make a numerical aperture of an objective lens to be high (high NA). What is expected to be put to practical use as a laser light source with a short wavelength is a violet semiconductor laser having a wavelength of about 400 nm.

There have been advanced research and development of a high density optical disc system that can conduct recording and reproducing of information by the use of the violet semiconductor laser having a wavelength of about 400 nm of this kind. As an example, in the case of the optical disk conducting recording and reproducing of information under the specifications of NA 0.85 and light source wavelength 405 nm (hereinafter referred to as "high density DVD in the present specification), it is possible to record information of 20-30 GB per one surface for the optical disc having a diameter of 12 cm that is the same as DVD (NA 0.6, light source wavelength 650 nm and storage capacity 4.7 GB). There has also been developed a light-converging optical system on which a diffractive structure is provided so that an appropriate light-converging spot may be formed on an information recording surface of the high density DVD of this kind.

(Patent Documents)

TOKKAI No. 2002 236253

Incidentally, a value of an optical pickup apparatus as a product is not considered to be high sufficiently when the ability of the optical pickup apparatus is only proper recording and/or reproducing of information for high density DVD. When considering that DVD and CD wherein various types of information are recorded are actually on the market presently, proper recording and/or reproducing of information for high density DVD alone are not sufficient, and the ability of conducting proper recording and/or reproducing of information also for conventional DVD or CD owned by a user, for example, leads to enhancement of a product value as an optical pickup apparatus of a compatible type. From the background of this kind, a light-converging optical system used for an optical pickup apparatus of a compatible type is required to secure a prescribed amount of spot light for conducting proper recording and/or reproducing of information even for both of high density DVD and conventional DVD and CD. However, in the Patent Documents stated above, the optimum amount of spot light has sometimes failed to be secured, because no consideration is paid to a diffraction efficiency in a diffractive structure, although there is a disclosure of the optical pickup apparatus wherein a diffractive structure is provided on an objective lens.

**SUMMARY OF THE INVENTION**

The invention has been achieved in view of the problems mentioned above, and its object is to provide an optical element for use in an optical pickup apparatus capable of conducting proper recording and/or reproducing of information for both of high density DVD and conventional DVD and CD, for example, while securing a sufficient amount of spot light and to provide the optical pickup apparatus.

**BRIEF DESCRIPTION OF THE DRAWINGS**

Fig. 1 is a diagram showing whether aberration characteristics are under or over.

Fig. 2 is a schematic structure diagram of an optical information recording and reproducing apparatus or an optical pickup apparatus relating to the first embodiment.

Fig. 3 is a schematic structure diagram of an optical information recording and reproducing apparatus or an optical pickup apparatus relating to the second embodiment.

Fig. 4 is a schematic structure diagram of an optical information recording and reproducing apparatus or an optical pickup apparatus relating to the third embodiment.

Fig. 5 is a schematic structure diagram of an optical information recording and reproducing apparatus or an optical pickup apparatus relating to the fourth embodiment.

Fig. 6 is a schematic structure diagram of an optical information recording and reproducing apparatus or an optical pickup apparatus relating to the fifth embodiment.

Fig. 7 is a schematic structure diagram of an optical information recording and reproducing apparatus or an optical pickup apparatus relating to the sixth embodiment.

Fig. 8 is a schematic structure diagram of an optical information recording and reproducing apparatus or an optical pickup apparatus relating to the seventh embodiment.

Fig. 9 is a schematic structure diagram of an optical information recording and reproducing apparatus or an optical pickup apparatus relating to the eighth embodiment.

Fig. 10 is a schematic structure diagram of an optical information recording and reproducing apparatus or an optical pickup apparatus relating to the ninth embodiment.

Fig. 11 is a schematic structure diagram of an optical information recording and reproducing apparatus or an optical pickup apparatus relating to the tenth embodiment.

Fig. 12 is a schematic structure diagram of an optical information recording and reproducing apparatus or an optical pickup apparatus relating to the eleventh embodiment.

Fig. 13 is a schematic structure diagram of an optical information recording and reproducing apparatus or an optical pickup apparatus relating to the twelfth embodiment.

Fig. 14 is a longitudinal spherical aberration diagram concerning diffracted light with the order number that achieves the maximum diffraction efficiency when a light flux for high density DVD passes through the objective lens in the example.

Fig. 15 is a longitudinal spherical aberration diagram concerning diffracted light with the order number that achieves the maximum diffraction efficiency when a light flux for DVD passes through the objective lens in the example.

Fig. 16 is a longitudinal spherical aberration diagram concerning diffracted light with the order number that achieves the maximum diffraction efficiency when a light flux for CD passes through the objective lens in the example.

Fig. 17 is an illustration showing an optical surface having a first region and a second region.

**DETAILED DESCRIPTION OF THE PREFERRED EMBODIMENT**

Hereinafter, the structure of the present invention to attain the above object will be described.

Item (1)

An optical element for use in an optical pickup apparatus described in Item (1) is represented by an optical element for an optical pickup apparatus having therein a first light source with wavelength $\lambda 1$, a second light source with wavelength $\lambda 2$ ($\lambda 1 < \lambda 2$), a third light source with wavelength $\lambda 3$ ($1.6 \cdot \lambda 1 \leq \lambda 3 \leq 2.0 \cdot \lambda 1$ and $\lambda 2 < \lambda 3$) and a light-converging optical system including an optical element, in which recording and/or reproducing of information is possible when a light flux emitted from the first light source is converged on an information recording surface of a first optical information recording medium through a protective layer with a thickness of t1, recording and/or reproducing of information is possible when a light flux emitted from the second light source is converged on an information recording surface of a second optical information recording medium through a protective layer with a thickness of t2 ($0.8 \cdot t1 \leq t2 \leq 1.2 \cdot t1$), and recording and/or reproducing of information is possible when a light flux emitted from the third light source is converged on an information recording surface of a third optical information recording medium through a protective layer with a thickness of t3 ($1.9 \cdot t1 \leq t3 \leq 2.1 \cdot t1$), wherein a diffractive structure is provided on at least one surface of the optical element, and when conducting recording and/or reproducing respectively for the first optical information recording medium, the second optical information recording medium and the third optical information recording medium, light fluxes emitted respectively from the first light source, the second light source and the third light source pass through the common diffractive structure to be converged respectively on information recording surfaces of the first, second and third optical information recording media to form spots, and further, when light fluxes having respectively wavelength $\lambda 1$ and wavelength $\lambda 3$ enter the optical element, the following expression is satisfied under the assumption that order numbers of diffracted light fluxes having the maximum diffraction efficiency among diffracted light fluxes generated by the diffractive structure are represented by n1 and n3 (n1 and n3 are natural numbers).

$$1.1 \geq (n1 \times \lambda 1) / (n3 \times \lambda 3) \geq 0.9 \qquad (1)$$

In the optical element described in Item (1), when the expression (1) is satisfied, there are enhanced an amount of diffracted light irradiated on the information recording surface of the first optical information recording medium through the diffractive structure on the optical element and an amount of diffracted light irradiated on the information recording surface of the third optical information recording medium (the closer (n1 x $\lambda 1$) / (n3 x $\lambda 3$) is to 1, the better the condition is), thus, occurrence of errors in writing and errors in reading of information can be controlled effectively.

Item (2)

In the optical element described in Item (1), an optical element for use in an optical pickup apparatus described in Item (2) is that it is possible to make an amount of step in the diffractive structure to be small and thereby to restrain a loss of substantial transmission factor of the optical element, because the order numbers n1 and n3 mentioned above satisfy the following expression.

$$n1 : n3 = 2 : 1 \qquad (2)$$

Item (3)

In the optical element described in Item (2), an optical element for use in an optical pickup apparatus described in Item (3) is that the off-axis characteristic is made to be excellent, and more appropriate correction may be carried out, when the light flux having wavelength $\lambda 1$ which is considered to be most difficult in correction of spherical aberration is made to enter the optical element as a parallel light flux, because

$$m1 = 0 \qquad (3)$$

holds when m1 represents an optical system magnification of the optical element for the light flux with wavelength $\lambda 1$. Further, when forming a light flux by using a beam shaper and a beam expander in addition to the optical element, if the beam shaper and the beam expander are inserted to be closer to a light source than the optical element is, a parallel light flux enters and thereby, the forming can be carried out properly. Incidentally, judging from the spirit of the invention stated above, it is assumed that errors of about 1% are estimated and at least an occasion of $|m1| \leq 1/100$ is included, under the condition of "optical system magnification m1 = 0".

Item (4)

In the optical element described in Item (2) or (3), an optical element for use in an optical pickup apparatus described in Item (4) is that the following expression holds when m3 represents the magnification of an optical system of the optical element for the light flux having wavelength $\lambda 3$;

$$-1/12.0 \leq m3 \leq -1/16.0 \qquad (4)$$

and therefore, a difference of spherical aberration caused by a difference of thickness between a protective layer of the first and second optical information recording media and that of the third optical information recording medium and by a difference in wavelength can be corrected properly by making the light flux emitted from the third light source to enter the optical element as a divergent light flux based on the expression (4).

Item (5)

In the optical element described in Item (2) or (3), an optical element for use in an optical pickup apparatus described in Item (5) is that it is preferable if the following expression holds when m3 represents the magnification of an optical system of the optical element for the light flux having wavelength $\lambda 3$.

$$-1/12.0 \leq m3 \leq -1/13.4 \tag{4'}$$

Item (6)

In the optical element described in any one of Items (2) to (5), an optical element for use in an optical pickup apparatus described in Item (6) is that the following expression is satisfied under the assumption that n2 (n2 is a natural number) represents the order number of the diffracted light flux having the maximum diffraction efficiency among diffracted light fluxes generated by the aforesaid diffractive structure, when the light flux having the wavelength $\lambda 2$ enters the optical element.

$$(n2 \times \lambda 2) / (n3 \times \lambda 3) \leq 1 \tag{5}$$

Though (n2 x $\lambda 2$) can take various values from a viewpoint of design, it is necessary to make the optical system magnification of the optical element to be equal for all light fluxes emitted from all light sources, when using a unit light source which is called the so-called "two-laser one-package" and is put to practical use wherein the second light source and the third light source are arranged on the same base board. Therefore, by satisfying the expression (5), the optical system magnification of the optical element for the light flux with wavelength $\lambda 2$ can be made equal to that of the optical element for the light flux with wavelength $\lambda 3$.

Item (7)

In the optical element described in Item (6), an optical element for use in an optical pickup apparatus described in Item (7) is that it is possible to use a unit light source such as the so-called "two-laser one-package", because the following expression holds when m2 represents the magnification of an optical system of the optical element for the light flux having wavelength $\lambda 2$.

$$-1/12.0 \leq m2 \leq -1/17.0 \tag{6}$$

Item (8)

In the optical element described in Item (6), an optical element for use in an optical pickup apparatus described in Item (8) is that it is more preferable if the following expression holds when m2 represents the magnification of an optical system of the optical element for the light flux having wavelength $\lambda 2$.

$$-1/12.0 \leq m2 \leq -1/13.4 \tag{6'}$$

Item (9)

In the optical element described in Item (7) or (8), an optical element for use in an optical pickup apparatus described in Item (9) is that the optical pickup apparatus can be downsized if the second light source emitting a light flux with wavelength $\lambda 2$ and the third light source emitting light with wavelength $\lambda 3$ are unitized to be a unit light source like the so-called two-laser one-package. Incidentally, "light sources are unitized" means a structure wherein two light sources, for example, are mounted on the same base board to be united, to which, however, the invention is not limited.

Item (10)

In the optical element described in any one of Items (2) to (5), an optical element for use in an optical pickup apparatus described in Item (10) is that it is preferable if the following expression holds when n2 (n2 is a natural number) represents the order number of the diffracted light flux having the maximum diffraction efficiency among diffracted light generated by the aforesaid diffractive structure, when the light flux having the wavelength $\lambda 2$ enters the optical element.

$$(n1 \times \lambda 1) / (n2 \times \lambda 2) \leq 1 \tag{7}$$

It is estimated naturally that a unit light source wherein the first light source and the second light source are arranged on the same base board will be developed in the future, and in that case, it is necessary to make the optical system magnification of the optical element to be equal for both light fluxes emitted respectively from both light sources. Therefore, by satisfying the expression (7), the optical system magnification of the optical element for the light flux with wavelength $\lambda 1$ can be made equal to that of the optical element for the light flux with wavelength $\lambda 2$.

Item (11)

In the optical element described in Item (3), (4), (5) or (10), an optical element for use in an optical pickup apparatus described in Item (11) is that the following expression holds when m2 represents the magnification of the optical element for the light flux having wavelength $\lambda 2$;

$$M2 = 0 \tag{8}$$

and therefore, it is possible to use a unit light source wherein the first light source and the second light source are arranged on the same base board, when that unit light source is developed. Incidentally, judging from the spirit of the invention stated above, it is assumed that errors of about 1% are estimated and at least an occasion of $|m2| \leq 1/100$ is included, under the condition of optical system magnification m2 = 0.

Item (12)

In the optical element described in Item (7), (8) or (11), an optical element for use in an optical pickup apparatus described in Item (12) is that it has optical characteristics which make spherical aberration to be under on the light flux passing through the diffractive structure, when the diffractive structure is changed so that a wavelength of a light source becomes longer. Since there are provided optical characteristics which make spherical aberration to be under for the light flux passing through the diffractive structure when the diffractive structure is changed so that a wavelength of a light source becomes longer, it is possible to correct spherical aberration caused by refraction effect in the case of a temperature change and spherical aberration caused by dispersion between lots of light sources in the direction to reduce them and thereby to control wave-front aberration in a converging spot to be smaller.

Item (13)

In the optical element described in Item (11) or (12), an optical element for use in an optical pickup apparatus described in Item (13) is such that the optical pickup apparatus can be downsized if the first light source emitting a light flux with wavelength $\lambda 1$ and the second light source emitting light with wavelength $\lambda 2$ are unitized.

Item (14)

In the optical element described in any one of Items (2) to (13), an optical element for use in an optical pickup apparatus described in Item (14) is such that it is preferable that the optical element for use in an optical pickup apparatus described in Item (14) is an objective lens, to which, however, the invention is not limited.

Item (15)

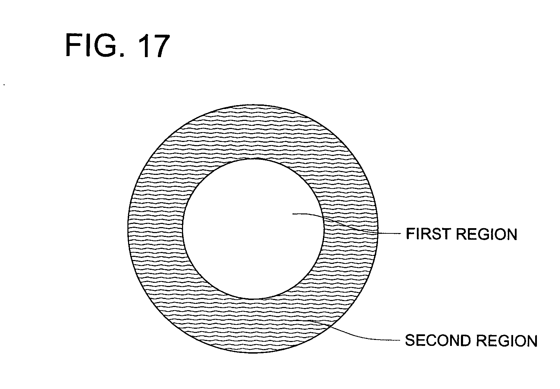

In the optical element described in any one of Items (1) to (14), an optical element for use in an optical pickup apparatus described in Item (15) is such that at least one optical surface of the optical element has a first region through which the light fluxes having respectively wavelengths $\lambda 1$, $\lambda 2$ and $\lambda 3$ emitted respectively from the first light source, the second light source and the third light source are made to pass for conducting recording and/or reproducing for the first optical information recording medium, the second optical information recording medium and the third optical information recording medium and a second region through which the light fluxes having respectively wavelengths $\lambda 1$ and $\lambda 2$ emitted respectively from the first light source and the second light source are made to pass and the light flux with wavelength λ3 does not pass for conducting recording and/or reproducing for the first optical information recording medium and the second optical information recording medium, and recording and/or reproducing may be conducted properly for the third optical information recording medium if dichroic coating is provided on the second region, see Fig. 17.

Item (16)

In the optical element described in Item (15), an optical element for use in an optical pickup apparatus described in Item (16) is such that if no diffractive structure is provided on the optical surface on which the dichroic coating is applied, causes for uneven coating can be reduced.

Item (17)

In the optical element described in one of Items (1) to (14), an optical element for use in an optical pickup apparatus described in Item (17) is such that at least one optical surface of the optical element has a first region through which the light fluxes having respectively wavelengths λ1, λ2 and λ3 emitted respectively from the first light source, the second light source and the third light source are made to pass for conducting recording and/or reproducing for the first optical information recording medium, the second optical information recording medium and the third optical information recording medium and a second region through which the light fluxes having respectively wavelengths λ1 and λ2 emitted respectively from the first light source and the second light source are made to pass to be converged on information recording surfaces for conducting recording and/or reproducing for the first optical information recording medium and the second optical information recording medium, and the light flux with wavelength λ3 is made to pass not to be converged on an information recording surface, and the first diffractive structure is provided on the first region and the second diffractive structure is provided on the second region, and the following expression holds under the assumption that n1A represents the order number of diffracted light having the maximum diffraction efficiency among diffracted light with wavelength λ1 generated by the first diffractive structure, n1D represents the order number of diffracted light having the maximum diffraction efficiency among diffracted light with wavelength λ2 generated by the first diffractive structure, n2A represents the order number of diffracted light having the maximum diffraction efficiency among diffracted light with wavelength λ1 generated by the second diffractive structure, and n2D represents the order number of diffracted light having the maximum diffraction efficiency among diffracted light with wavelength λ2 generated by the second diffractive structure.

$$n1A : n1D \neq n2A : n2D \qquad (9)$$

Incidentally, numerical aperture NA in the course of conducting recording and/or reproducing of information for the third optical information recording medium is made to be smaller than numerical aperture NA in the course of conducting recording and/or reproducing of information for the optical information recording medium other than the third optical information recording medium, and in this case, the structure to stop down the numerical aperture NA is needed when the third optical information recording medium is used. In the invention, the expression (9) is satisfied. In order to realize compatibility for three optical information recording media, it is necessary to change an optical system magnification of the objective optical element for each light, for the combination of the order numbers having the maximum diffraction efficiency generated when light respectively with wavelengths λ1, λ2 and λ3 enter. Though the optical system magnification of the objective optical element for each light is the same between the first region and the second region, it is possible to make the diffracted light having the maximum diffraction efficiency in the light flux with the wavelength λ3 that has passed through the second region to have spherical aberration because the combination of the order numbers of diffraction is changed, and therefore, light converging is not conducted on the information recording surface of the third optical information recording medium, which makes it possible to obtain effects to stop down the numerical aperture NA.

Item (18)

In the optical element in either one of Items (1)-(14), an optical element for use in an optical pickup apparatus described in Item (18) is such that at least one optical surface of the optical element has a first region through which the light fluxes having respectively wavelengths λ1, λ2 and λ3 emitted respectively from the first light source, the second light source and the third light source are made to pass for conducting recording and/or reproducing for the first optical information recording medium, the second optical information recording medium and the third optical information recording medium and a second region through which the light fluxes having respectively wavelengths λ1 and λ2 emitted respectively from the first light source and the second light source are made to pass to be converged on information recording surfaces for conducting recording and/or reproducing for the first optical information recording medium and the second optical information recording medium, and the light flux with wavelength λ3 is made to pass not to be converged on an information recording surface, and the first diffractive structure is provided on the first region and the second diffractive structure is provided on the second region, and the following expression holds under the assumption that n1A represents the order number of diffracted light having the maximum diffraction efficiency among diffracted light with wavelength λ1 generated by the first diffractive structure, n1D represents the order number of diffracted light having the maximum diffraction efficiency among diffracted light with wavelength λ2 generated by the first diffractive structure, n2A represents the order number of diffracted light having the maximum diffraction efficiency among diffracted light with wavelength λ1 generated by the second diffractive structure, and n2D represents the order number of diffracted light having the maximum diffraction efficiency among diffracted light with wavelength λ2 generated by the second diffractive structure, and n2A is an odd number (refer Item 18).

$$N1A : n1D = n2A : n2D \tag{10}$$

In the invention, if the wavelength λ3 is twice the wavelength λ1, the maximum diffraction efficiency in the light flux with the wavelength λ3 that has passed through the second diffractive structure becomes the order number n2A/2 under the assumption that n2A represents the order number of the maximum diffraction efficiency in the light flux with the wavelength λ1 that has passed through the second diffractive structure, because the expression (10) is satisfied. Therefore, if the order number n2A is an even number, it is not possible to make the diffracted light having the maximum diffraction efficiency in the light flux with the wavelength λ3 that has passed through the second region to have spherical aberration. However, if n2A is an odd number, diffraction efficiency in the order number of an integer close to n2A/2 becomes high. Since that diffracted light is not converged, light with wavelength λ3 that has passed through the second diffractive structure is not converged efficiently on an information recording surface of the third optical information recording medium, thus, numerical aperture NA can be stopped down.

Item (19)

In the optical element described in Item (18), an optical element for use in an optical pickup apparatus described in Item (18) is such that an optical element for an optical pickup apparatus wherein

$$N2A = 5, n2D = 3,$$

it is possible to conduct recording and/or reproducing of information properly by using the diffracted light with an appropriate order number, respectively for the first and second optical information recording media.

Item (20)

In the optical element described in Item (18) to (19), an optical element for use in an optical pickup apparatus described in Item (18) is such that an optical element for an optical pickup apparatus wherein

$$N2A = 3, n2D = 2,$$

it is possible to conduct recording and/or reproducing of information properly by using the diffracted light with an appropriate order number, respectively for the first and second optical information recording media.

Item (21)

In the optical element described in Item (18), an optical element for an optical pickup apparatus (21) is such that, if the maximum diffraction efficiency among diffracted light having wavelength λ3 generated by the second diffractive structure is 60% or less, it is possible to conduct recording and/or reproducing of information properly for the third optical information recording medium.

Item (22)

In the optical element described in one of Items (18) to (21), an optical element for an optical pickup apparatus (22) is such that, chromatic aberration is corrected for the light flux with the wavelength $\lambda 1$. When there is a difference in the combination of the diffraction order numbers each having the maximum diffraction efficiency caused when each of light respectively with wavelength $\lambda 1$ and wavelength $\lambda 2$ enters, between the first diffractive structure and the second diffractive structure, it is necessary to make light-converged positions of the diffracted light having passed respective regions to agree with each other, by utilizing paraxial power of the diffraction. On the contrary, if the expression (10) is satisfied, it is possible to utilize paraxial power of diffraction to conduct color correction for the light flux with wavelength $\lambda 1$ or $\lambda 2$, and therefore, recording and/or reproducing of information can be conducted more properly for the first optical information recording medium.

Item (23)

An optical element for use in an optical pickup apparatus described in Item (23) is such that a first light source with wavelength $\lambda 1$, a second light source with wavelength $\lambda 2$ ($\lambda 1 < \lambda 2$), a third light source with wavelength $\lambda 3$ ($1.6 \cdot \lambda 1 \leq \lambda 3 \leq 2.0 \cdot \lambda 1$ and $\lambda 2 < \lambda 3$) and a light-converging optical system including an optical element are provided, and recording and/or reproducing of information can be conducted when the light-converging optical system converges a light flux emitted from the first light source on an information recording surface of the first optical information recording medium through a protective layer with thickness t1, recording and/or reproducing of information can be conducted when the light-converging optical system converges a light flux emitted from the second light source on an information recording surface of the second optical information recording medium through a protective layer with thickness t2 ($0.8 \cdot t1 \leq t2 \leq 1.2 \cdot t1$) and, recording and/or reproducing of information can be conducted when the light-converging optical system converges a light flux emitted from the third light source on an information recording surface of the third optical information recording medium through a protective layer with thickness t3 ($1.9 \cdot t1 \leq t3 \leq 2.1 \cdot t1$), wherein a first diffractive structure is provided on at least one surface of the optical element, and when conducting recording and/or reproducing for each of the first, second and third optical information recording media, each of light fluxes emitted respectively from the first, second and third light sources is converged on each of information recording surfaces of the first, second and third optical information recording media after passing commonly through the first diffractive structure, to form a spot, and further, the following expression is satisfied when n1 and n3 (each of n1 and n3 is a natural number) represent the order numbers of the diffracted light flux having the maximum diffraction efficiency among diffracted light generated by the first diffractive structure when light fluxes having respectively wavelength $\lambda 1$ and wavelength $\lambda 3$ enter the optical element.

$$1.1 \geq (n1 \times \lambda 1) / (n3 \times \lambda 3) \geq 0.9 \tag{1}$$

Effects of the above structure are the same as those of the structure described in Item (1).

Item (24)

In the optical pickup apparatus described in Item (23), an optical pickup apparatus described in Item (24) is such that the order numbers n1 and n3 mentioned above satisfy the following expression.

$$n1 : n3 = 2 : 1 \tag{2}$$

Effects of the above structure are the same as those of the structure described in Item (2).

Item (25)

In the optical pickup apparatus described in Item (24), an optical pickup apparatus described in Item (25) is such that the following expression holds when m1 represents the magnification of the optical element for the light flux having wavelength $\lambda 1$.

$$M2 = 0 \tag{3}$$

Effects of the above structure are the same as those of the structure described in Item (3).

Item (26)

In the optical pickup apparatus described in Item (24) or (25), an optical pickup apparatus described in Item (26) is such that the following expression holds when m3 represents the magnification of the optical element for the light flux having wavelength $\lambda 3$.

$$-1/12.0 \leq m3 \leq -1/16.0 \tag{4}$$

Effects of the above structure are the same as those of the structure described in Item (4).

Item (27)

In the optical pickup apparatus described in Item (24) or (25), an optical pickup apparatus described in Item (26) is such that the following expression holds when m3 represents the magnification of the optical element for the light flux having wavelength $\lambda 3$.

$$-1/12.0 \leq m3 \leq -1/13.4 \tag{4'}$$

Effects of the above structure are the same as those of the structure described in Item (5). Item (28)
In the optical pickup apparatus described in any one of Items (24) to (27), an optical pickup apparatus described in Item (28) is such that the following expression holds when n2 (n2 is a natural number) represents the order number of the diffracted light flux having the maximum diffraction efficiency among diffracted light generated by the aforesaid first diffractive structure, when the light flux having the wavelength $\lambda 2$ enters the optical element.

$$(n2 \times \lambda 2) / (n3 \times \lambda 3) \leq 1 \tag{5}$$

Effects of the above structure are the same as those of the structure described in Item (6). Item (29)
In the optical pickup apparatus described in Item (28), an optical pickup apparatus described in Item (29) is such that the following expression holds when m2 represents the magnification of an optical system of the optical element for the light flux having wavelength $\lambda 2$.

$$-1/12.0 \leq m2 \leq -1/17.0 \tag{6}$$

Effects of the above structure are the same as those of the structure described in Item (7). Item (30)
In the optical pickup apparatus described in Item (28), an optical pickup apparatus described in Item (30) is such that the following expression holds when m2 represents the magnification of an optical system of the optical element for the light flux having wavelength $\lambda 2$.

$$-1/12.0 \leq m2 \leq -1/13.4 \tag{6'}$$

Effects of the above structure are the same as those of the structure described in Item (8).

Item (31)

In the optical pickup apparatus described in Item (30), an optical pickup apparatus described in Item (31) is such that the second light source emitting a light flux with wavelength $\lambda 2$ and the third light source emitting light with wavelength $\lambda 3$ are unitized. Effects of the above structure are the same as those of the structure described in Item (9).

Item (32)

In the optical pickup apparatus described in any one of Items (24) to (27), an optical pickup apparatus described in Item (32) is such that the following expression holds when n2 (n2 is a natural number) represents the order number of the diffracted light flux having the maximum diffraction efficiency among diffracted light generated by the aforesaid first diffractive structure, when the light flux having the wavelength $\lambda 2$ enters the optical element.

$$(n1 \times \lambda 1) / (n2 \times \lambda 2) \leq 1 \tag{7}$$

Effects of the above structure are the same as those of the structure described in Item (10).

Item (33)

In the optical pickup apparatus described in Item (25), (26), (27) or (32), an optical pickup apparatus described in Item (33) is such that the following expression holds when m2 represents the magnification of the optical element for the light flux having wavelength $\lambda 2$.

$$M2 = 0 \tag{8}$$

Effects of the above structure are the same as those of the structure described in Item (11).

Item (34)

In the optical pickup apparatus described in Item (29), (30) or (33), an optical pickup apparatus described in Item (34) is such that the first diffractive structure has optical characteristics which make spherical aberration to be under on the light flux that has passed through the diffractive structure, when the wavelength of the light source is changed to be longer. Effects of the above structure are the same as those of the structure described in Item (12).

Item (35)

In the optical pickup apparatus described in Item (33) or (34), an optical pickup apparatus described in Item (35) is such that the first light source emitting a light flux with wavelength $\lambda 1$ and the second light source emitting light with wavelength $\lambda 2$ are unitized. Effects of the above structure are the same as those of the structure described in Item (13).

Item (36)

In the optical pickup apparatus described in any one of Items (24) to (35), an optical pickup apparatus described in Item (36) is such that the optical element is an objective lens.

Item (37)

In the optical pickup apparatus described in either one of Items (23) - (31), the optical pickup apparatus described in Item (37) is such that the light flux with wavelength $\lambda 2$ enters the optical element under the condition of a divergent light flux, and a coupling lens is arranged between the second light source and the optical element.

Item (38)

In the optical pickup apparatus described in Item (37), the optical pickup apparatus described in Item (38) is such that when the optical surface of the coupling lens is divided into an inner region closer to the optical axis and an outer region farther from the optical axis with the border of the position corresponding to numerical aperture NAD in the case of conducting recording and/or reproducing of information for the second optical information recording medium, a divergent angle of the light flux with the wavelength $\lambda 2$ that has passed through the inner region is different from that of the light flux with the wavelength $\lambda 2$ that has passed through the outer region.

Incidentally, if a thickness of a protective layer in the optical information recording medium is different, when the magnification of the objective lens in recording and/or reproducing of information for each optical information recording medium is the same, there is caused spherical aberration on a light-converged spot on an information recording surface of the optical information recording medium having a protective layer with a different thickness. On the contrary, for forming a proper light-converged spot even when converging through a protective layer having a different thickness, a divergent angle is changed, and for example, an infinite light flux on one side and a finite light flux on the other side are made to enter the objective optical element. However, a sine condition can not be satisfied though spherical aberration can be corrected. When finite light enters the objective optical element in which a sine condition is not satisfied in particular, if a deviation of an optical axis is caused between the objective optical element and the other optical element by the problem of accuracy in incorporation or be tracking, there is a fear that coma which is not negligible is caused.

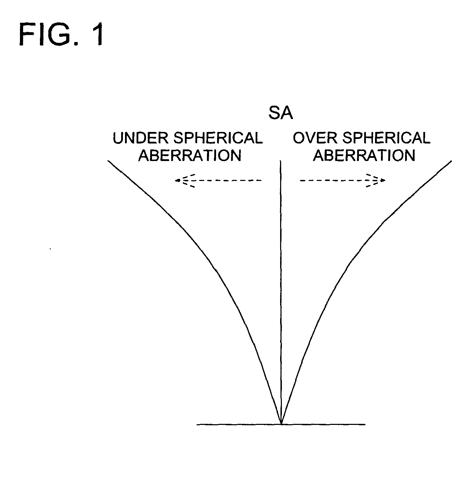

In the structure, therefore, the problems mentioned above are solved in the following way. To be more concrete in the explanation of the structure, it is possible to provide a diffractive structure for changing an amount of occurrence of spherical aberration with a border in the vicinity of the position corresponding to numerical aperture NAD = 0.65 (which is called an effective diameter) on coupling lens (collimator) 115, for example, referring to Fig. 1 showing the optical pickup apparatus. In this case, when the total light-converging optical system is viewed, spherical aberration is a diffraction limit or less within a range of NAD, and in the region outside the NAD, over spherical aberration is caused. By doing this, even when the light flux with wavelength $\lambda 2$ is made to enter under the condition of a finite light flux, it is possible to correct coma on the occasion wherein objective optical element (objective lens) 16 is shifted in the direction perpendicular to the optical axis.

Namely, when a deviation of an optical axis is not caused between the objective optical element and the coupling lens, recording and/or reproducing of information can be conducted properly even if no actions are taken on the coupling lens in particular, because the light flux with wavelength $\lambda 2$ does not take part in the inside of the light-converged spot when that light flux passes through the outside of the effective diameter. While, when the deviation of an optical axis is not caused between them, the light flux entering the effective diameter of the objective optical element through the outside of the effective diameter of the coupling lens, for example, becomes one whose deterioration of aberration is remarkable on an information recording surface, and thereby, proper recording and/or reproducing of information is impeded. Therefore, the aforementioned coupling lens is used so that the light flux that has passed through the outside of the effective diameter may not be converged on an information recording surface, and thereby, it is possible to conduct recording and/or reproducing of information properly by using the light flux which has passed through the only region where the effective diameter of the objective optical element is overlapped on the effective diameter of the coupling lens and has less deterioration of aberration. Further, since the light flux with wavelength $\lambda 1$ enters the objective optical element in the form of an infinite light flux, recording and/or reproducing of information for the first optical information recording medium is not adversely affected, even when the coupling lens as that stated above is provided.

Item (39)

In the optical pickup apparatus described in Item (38), the optical pickup apparatus described in Item (39) is such that a divergent angle of the light flux with wavelength $\lambda 2$ that has passed through the outer region is greater than that of the light flux with wavelength $\lambda 2$ that has passed through the inner region, and thereby, the above-mentioned effects can be exhibited more efficiently.

Item (40)

In the optical pickup apparatus described in either one of Items (37) - (39), the optical pickup apparatus described in Item (40) is such that the light flux with wavelength $\lambda 3$ enters the optical element after passing through the coupling lens, which makes the structure of the optical pickup apparatus to be simple.

Item (41)

In the optical pickup apparatus described in Item (40), the optical pickup apparatus described in Item (41) is such that when the optical surface of the coupling lens is divided into an inner region closer to the optical axis and an outer region farther from the optical axis with the border of the position corresponding to numerical aperture NAC in the case of conducting recording and/or reproducing of information for the third optical information recording medium, a divergent angle of the light flux with the wavelength $\lambda 3$ that has passed through the inner region is different from that of the light flux with the wavelength $\lambda 3$ that has passed through the outer region, which makes it possible to conduct recording and/or reproducing of information more properly even when the light flux with wavelength $\lambda 3$ is made to enter the objective optical element in the form of a finite light flux.

Item (42)

In the optical pickup apparatus described in either one of Items (38) - (41), the optical pickup apparatus described in Item (42) is such that a diffractive structure is provided on at least one of the inner region and the outer region of the coupling lens, and thereby, the effects stated above can be realized.

Item (43)

In the optical pickup apparatus described in Item (37), the optical pickup apparatus described in Item (43) is such that when the optical surface of the coupling lens is divided into an inner region closer to the optical axis and an outer region farther from the optical axis with the border of the position corresponding to numerical aperture NAD in the case of conducting recording and/or reproducing of information for the second optical information recording medium, a dichroic coat which does not transmit the light flux with wavelength $\lambda 2$ is provided on the outer region, and when the optical surface of the optical element is divided into an inner region closer to the optical axis and an outer region farther from the optical axis with the border of the position corresponding to numerical aperture NAD in the case of conducting recording and/or reproducing of information for the second optical information recording medium, a dichroic coat which does not transmit the light flux with wavelength $\lambda 2$ is provided on the outer region, and thereby, it is possible to conduct recording and/or reproducing of information properly by using the light flux which has passed through the only region where the effective diameter corresponding to numerical aperture NAD of the objective optical element is overlapped on the effective diameter corresponding to numerical aperture NAD of the coupling lens and has less deterioration of aberration. Incidentally, "transmitting no light flux" means reducing an amount of transmitted light (including an amount of transmitted light which is zero) to the extent having no influence on recording and/or reproducing of information.

Item (44)

In the optical pickup apparatus described in Item (37), the optical pickup apparatus described in Item (44) is such that a coupling lens is arranged between the third light source and the optical element, and when the optical surface of the coupling lens is divided into an inner region closer to the optical axis and an outer region farther from the optical axis with the border of the position corresponding to numerical aperture NAC in the case of conducting recording and/or reproducing of information for the third optical information recording medium, a dichroic coat which does not transmit the light flux with wavelength $\lambda 3$ is provided on the outer region, and when the optical surface of the optical element is divided into an inner region closer to the optical axis and an outer region farther from the optical axis with the border of the position corresponding to numerical aperture NAC in the case of conducting recording and/or reproducing of information for the third optical information recording medium, a dichroic coat which does not transmit the light flux with wavelength $\lambda 3$ is provided on the outer region, and thereby, it is possible to conduct recording and/ or reproducing of information properly by using the light flux which has passed through the only region where the effective diameter corresponding to numerical aperture NAC of the coupling lens is overlapped on the effective diameter corresponding to numerical aperture NAC of the coupling lens and has less deterioration of aberration.

Item (45)

In a coupling lens used for the optical pickup apparatus described in either one of Items (37) - (44), the optical pickup apparatus described in Item (45) is such that the light flux with wavelength $\lambda 1$ passes through the coupling lens and enters the optical element.

Item (46)

In the optical pickup apparatus described in any one of Items (23) to (44), an optical pickup apparatus described in Item (46) is such that recording and/or reproducing of information may be conducted properly for the third optical information recording medium, if an opening regulating element for the light flux with wavelength $\lambda 3$ is arranged to be closer than the light-converging optical system to the light source, on the optical path of the light flux with wavelength $\lambda 3$.

Item (47)

In the optical pickup apparatus described in Item (46), an optical pickup apparatus described in Item (47) is such that it is preferable if the opening regulating element is a dichroic filter.

Item (48)

In the optical pickup apparatus described in Item (46), an optical pickup apparatus described in Item (48) is such that it is preferable if the opening regulating element is a dichroic prism.

Item (49)

In the optical pickup apparatus described in Item (46), an optical pickup apparatus described in Item (49) is such that it is preferable if the opening regulating element is a coupling lens.

Item (50)

In the optical pickup apparatus described in Item (46), an optical pickup apparatus described in Item (50) is such that it is preferable if the opening regulating element is a phase difference plate.

Item (51)

In the optical pickup apparatus described in any one of Items (23) to (44) and (46) to (50), an optical pickup apparatus described in Item (51) is such that at least one optical surface of the light-converging optical system has thereon a first region that transmits light fluxes which are emitted respectively from the first, second and third light sources and have respectively wavelength $\lambda 1$, wavelength $\lambda 2$ and wavelength $\lambda 3$ for conducting recording and/or reproducing respectively for the first optical information recording medium, the second optical information recording medium and the third optical information recording medium and a second region that transmits light fluxes which are emitted respectively from the first and second light sources and have respectively wavelength $\lambda 1$ and wavelength $\lambda 2$ for conducting recording and/or reproducing respectively for the first optical information recording medium and the second optical information recording medium, but does not transmit a light flux with wavelength $\lambda 3$ emitted from the third light, and when a dichroic coating is provided on the second region, recording and/or reproducing of information can be conducted properly for the third optical information recording medium. Effects of the above structure are the same as those of the structure described in Item 15.

Item (52)

In the optical pickup apparatus described in Item (51), an optical pickup apparatus described in Item (52) is such that if no diffractive structure is provided on the optical surface on which the dichroic coating is applied, causes for uneven coating can be reduced. Effects of the above structure are the same as those of the structure described in Item 16. Item (53)

In the optical pickup apparatus described in one of Items (23) to (44), (46) to (52), an optical pickup apparatus described in Item (53) is such that at least one optical surface of the optical element has a first region through which the light fluxes having respectively wavelengths $\lambda 1$, $\lambda 2$ and $\lambda 3$ emitted respectively from the first light source, the second light source and the third light source are made to pass for conducting recording and/or reproducing for the first optical information recording medium, the second optical information recording medium and the third optical information recording medium and a second region through which the light fluxes having respectively wavelengths $\lambda 1$ and $\lambda 2$ emitted respectively from the first light source and the second light source are made to pass and the light flux with wavelength $\lambda 3$ does not pass for conducting recording and/or reproducing for the first optical information recording medium and the second optical information recording medium, and recording and/or reproducing may be conducted properly for the third optical information recording medium if dichroic coating is provided on the second region.

Item (54)

In the optical pickup apparatus described in one of Items (23) to (44), (46) to (53), an optical pickup apparatus described in Item (54) is such that at least one optical surface of the optical element has a first region through which the light fluxes having respectively wavelengths $\lambda 1$, $\lambda 2$ and $\lambda 3$ emitted respectively from the first light source, the second light source and the third light source are made to pass for conducting recording and/or reproducing for the first optical information recording medium, the second optical information recording medium and the third optical information recording medium and a second region through which the light fluxes having respectively wavelengths $\lambda 1$ and $\lambda 2$ emitted respectively from the first light source and the second light source are made to pass to be converged on information recording surfaces for conducting recording and/or reproducing for the first optical information recording medium and the second optical information recording medium, and the light flux with wavelength $\lambda 3$ is made to pass not to be converged on an information recording surface, and the first diffractive structure is provided on the first region and the second diffractive structure is provided on the second region, and the following expression holds under the assumption that n1A represents the order number of diffracted light having the maximum diffraction efficiency among diffracted light with wavelength $\lambda 1$ generated by the first diffractive structure, n1D represents the order number of diffracted light having the maximum diffraction efficiency among diffracted light with wavelength $\lambda 2$ generated by the first diffractive structure, n2A represents the order number of diffracted light having the maximum diffraction efficiency among diffracted light with wavelength $\lambda 1$ generated by the second diffractive structure, and n2D represents the order number of diffracted light having the maximum diffraction efficiency among diffracted light with wavelength $\lambda 2$ generated by the second diffractive structure.

$$N1A : n1D \neq n2A : n2D \qquad (9)$$

Effects of the above structure are the same as those of the structure described in Item (17).

Item (55)

In the optical pickup apparatus described in one of Items (23) to (44), (46) to (53), an optical pickup apparatus described in Item (55) is such that at least one optical surface of the optical element has a first region through which the light fluxes having respectively wavelengths $\lambda 1$, $\lambda 2$ and $\lambda 3$ emitted respectively from the first light source, the second light source and the third light source are made to pass for conducting recording and/or reproducing for the first optical information recording medium, the second optical information recording medium and the third optical information recording medium and a second region through which the light fluxes having respectively wavelengths $\lambda 1$ and $\lambda 2$ emitted respectively from the first light source and the second light source are made to pass to be converged on information recording surfaces for conducting recording and/or reproducing for the first optical information recording medium and the second optical information recording medium, and the light flux with wavelength $\lambda 3$ is made to pass not to be converged on an information recording surface, and the first diffractive structure is provided on the first region and the second diffractive structure is provided on the second region, and the following expression holds under the assumption that n1A represents the order number of diffracted light having the maximum diffraction efficiency among diffracted light with wavelength $\lambda 1$ generated by the first diffractive structure, n1D represents the order number of diffracted light having the maximum diffraction efficiency among diffracted light with wavelength $\lambda 2$ generated by the first diffractive structure, n2A represents the order number of diffracted light having the maximum diffraction efficiency among diffracted light with wavelength $\lambda 1$ generated by the second diffractive structure, and n2D represents the order number of diffracted light having the maximum diffraction efficiency among diffracted light with wavelength $\lambda 2$ generated by the second diffractive structure, and n2A is an odd number.

$$N1A : n1D = n2A : n2D \qquad (10)$$

Effects of the above structure are the same as those of the structure described in Item (18).

Item (56)

In the optical pickup apparatus described in Item (55), an optical pickup apparatus described in Item (56) is such that

$$N2A = 5, n2D = 3.$$

Effects of the above structure are the same as those of the structure described in Item (19) .

Item (57)

In the optical pickup apparatus described in Item (55), an optical pickup apparatus described in Item (57) is such that

$$N2A = 3, n2D = 2.$$

Effects of the above structure are the same as those of the structure described in Item (20).

Item (58)

In the optical pickup apparatus described in any one of Items (55) to (57), an optical pickup apparatus described in Item (58) is such that the maximum diffraction efficiency among diffracted light with wavelength $\lambda 3$ generated by the second diffractive structure is 60% or less. Effects of the above structure are the same as those of the structure described in Item (21).

Item (59)

In the optical pickup apparatus described in any one of Items (55) to (58), an optical pickup apparatus described in Item (59) is such that a color correction is conducted for a light flux having the wavelength $\lambda 1$. Effects of the above structure are the same as those of the structure described in Item 22.

Item (60)

In the optical pickup apparatus described in any one of Items (33) to (59), an optical pickup apparatus described in Item (60) is such that if the third light source is a hololaser, an optical pickup apparatus can further be downsized because the third light source and a photo-detector are unitized.

Item (61)

In the optical pickup apparatus described in Item (33), an optical pickup apparatus described in Item (61) is such that if a first chromatic aberration correcting element for conducting chromatic aberration correction for the light flux with wavelength $\lambda 1$ is arranged on an optical path of the light flux with wavelength $\lambda 1$, recording and/or reproducing of information can be conducted properly for the first optical information recording medium.

Item (62)

In the optical pickup apparatus described in Item (61), an optical pickup apparatus described in Item (62) is such that if a second chromatic aberration correcting element for conducting chromatic aberration correction for the light flux with wavelength $\lambda 2$ is arranged on an optical path of the light flux with wavelength $\lambda 2$, recording and/or reproducing of information can be conducted properly for the second optical information recording medium.

Item (63)

In the optical pickup apparatus described in Item (33), an optical pickup apparatus described in Item (63) is such that if a first chromatic aberration correcting element for conducting chromatic aberration correction for the light flux with wavelength $\lambda 1$ is arranged on an optical path through which the light flux with wavelength $\lambda 1$ only passes, and if a second chromatic aberration correcting element for conducting chromatic aberration correction for the light flux with wavelength $\lambda 2$ is arranged on an optical path through which the light flux with wavelength $\lambda 2$ only passes, recording and/or reproducing of information can be conducted properly for the first and second optical information recording media. Item (64)
In the optical pickup apparatus described in Item (33), an optical pickup apparatus described in Item (64) is such that if a first chromatic aberration correcting element for conducting chromatic aberration correction for the light flux with wavelength $\lambda 1$ is arranged on an optical path through which the light flux with wavelength $\lambda 1$ and the light flux with wavelength $\lambda 2$ pass commonly, and if a second chromatic aberration correcting element for conducting chromatic aberration correction for the light flux with wavelength $\lambda 2$ is arranged on an optical path through which the light flux with wavelength $\lambda 2$ only passes, recording and/or reproducing of information can be conducted properly for the first and second optical information recording media.

Item (65)

In the optical pickup apparatus described in any one of Items (21) and (61) to (64), an optical pickup apparatus described in Item (65) is such that if a collimator is arranged on an optical path through which the light flux with wavelength $\lambda 1$ and the light flux with wavelength $\lambda 2$ pass commonly, recording and/or reproducing of information can be conducted properly for the first and second optical information recording media.

Item (66)

In the optical pickup apparatus described in Item (65), an optical pickup apparatus described in Item (66) is such that if a first beam shaper for shaping the light flux with wavelength λ1 is arranged to be closer than the collimator to the light source on an optical path through which the light flux with wavelength λ1 passes, recording and/or reproducing of information can be conducted properly for the first optical information recording medium.

Item (67)

In the optical pickup apparatus described in Item (66), an optical pickup apparatus described in Item (67) is such that if the first beam shaper corrects chromatic aberration for the light flux with wavelength λ1, recording and/or reproducing of information can be conducted properly for the first optical information recording medium, and the structure of the optical pickup apparatus can further be simplified. Item (68)

In the optical pickup apparatus described in Item (65), an optical pickup apparatus described in Item (68) is such that if a second beam shaper for shaping the light flux with wavelength λ2 is arranged to be closer than the collimator to the light source on an optical path through which the light flux with wavelength λ2 passes, recording and/or reproducing of information can be conducted properly for the second optical information recording medium.

Item (69)

In the optical pickup apparatus described in Item (68), an optical pickup apparatus described in Item (69) is such that if the second beam shaper corrects chromatic aberration for the light flux with wavelength λ2, recording and/or reproducing of information can be conducted properly for the second optical information recording medium, and the structure of the optical pickup apparatus can further be simplified.

Item (70)

In the optical pickup apparatus described in Item (65), an optical pickup apparatus described in Item (70) is such that if a beam shaper for shaping the light flux with wavelength λ1 or shaping the light flux with wavelength λ2 is arranged to be closer than the collimator to the light source on an optical path through which the light flux with wavelength λ1 and the light flux with wavelength λ2 pass commonly, recording and/or reproducing of information can be conducted properly for the first and second optical information recording media.

Item (71)

In the optical pickup apparatus described in any one of Items (65) to (70), an optical pickup apparatus described in Item (71) is such that if a material of the collimator is plastic, production at low cost is possible.

Item (72)

In the optical pickup apparatus described in Item (65), an optical pickup apparatus described in Item (72) is such that if a beam shaping prism for shaping the light flux with wavelength λ1 or the light flux with wavelength λ2 is arranged between the collimator and the light-converging optical system on an optical path through which the light flux with wavelength λ1 and the light flux with wavelength λ2 pass commonly, recording and/or reproducing of information can be conducted properly for the first and second optical information recording media.

Item (73)

In the optical pickup apparatus described in Item (72), an optical pickup apparatus described in Item (73) is such that if a material of the collimator is glass, excellent optical characteristics can be obtained.

Item (74)

In the optical pickup apparatus described in any one of Items (33) and (61) to (63), an optical pickup apparatus described in Item (74) is such that if a first collimator is arranged on an optical path through which the light flux with wavelength λ1 only passes and a second collimator is arranged on an optical path through which the light flux with wavelength λ2 only passes, recording and/or reproducing of information can be conducted properly for the first and second optical information recording media.

Item (75)

In the optical pickup apparatus described in Item (74), an optical pickup apparatus described in Item (75) is such that if a material of at least one of the first collimator and the second collimator is plastic, production at low cost is possible.

Item (76)

In the optical pickup apparatus described in Item (75), an optical pickup apparatus described in Item (76) is such that if the collimator whose material is plastic on at least one side is a chromatic aberration correcting element, recording and/or reproducing of information can be conducted properly for the first optical information recording medium and/or the second optical information recording medium.

Item (77)

In the optical pickup apparatus described in Item (74), an optical pickup apparatus described in Item (77) is such that if a first beam shaper for shaping the light flux with wavelength $\lambda 1$ is arranged to be closer than the first collimator to the light source on an optical path through which the light flux with wavelength $\lambda 1$ passes, recording and/ or reproducing of information can be conducted properly for the first optical information recording medium.

Item (78)

In the optical pickup apparatus described in Item (77), an optical pickup apparatus described in Item (78) is such that if the first beam shaper is the first chromatic aberration correcting element, recording and/or reproducing of information can be conducted properly for the first optical information recording medium, and the structure of the optical pickup apparatus can further be simplified.

Item (79)

In the optical pickup apparatus described in Item (78), an optical pickup apparatus described in Item (79) is such that if a second beam shaper for shaping the light flux with wavelength $\lambda 2$ is arranged to be closer than the collimator to the light source on an optical path through which the light flux with wavelength $\lambda 2$ passes, recording and/ or reproducing of information can be conducted properly for the second optical information recording medium.

Item (80)

In the optical pickup apparatus described in Item (79), an optical pickup apparatus described in Item (80) is such that if the second beam shaper is the second chromatic aberration correcting element, recording and/or reproducing of information can be conducted properly for the second optical information recording medium, and the structure of the optical pickup apparatus can further be simplified.

Item (81)

In the optical pickup apparatus described in Item (74), an optical pickup apparatus described in Item (81) is such that if a first beam shaping prism for shaping the light flux with wavelength $\lambda 1$ is arranged between the first collimator and the light-converging optical system on an optical path of the light flux with wavelength $\lambda 1$, recording and/ or reproducing of information can be conducted properly for the first optical information recording medium.

Item (82)

In the optical pickup apparatus described in Item (81), an optical pickup apparatus described in Item (82) is such that if a second beam shaping prism for shaping the light flux with wavelength $\lambda 2$ is arranged between the second collimator and the light-converging optical system on an optical path of the light flux with wavelength $\lambda 2$, recording and/ or reproducing of information can be conducted properly for the second optical information recording medium.

Item (83)

In the optical pickup apparatus described in any one of Items (37) to (82), it is preferable if the optical element is an objective lens.

The expression "chromatic aberration correction (achromatizing))" used in the present specification means that fluctuations of a position of a light-converging spot (position where the wave-front aberration of the light-converging spot becomes minimum) in the direction of an optical axis by an objective optical element are controlled when a wavelength is changed, and thereby, means that the wave-front aberration after wavelength fluctuations in the light-converging spot position before wavelength fluctuations (position where the wave-front aberration of the light-converging spot becomes minimum) is controlled within a range which makes recording and/or reproducing of information for an optical information recording medium possible.

With respect to the expression "making spherical aberration to be under" in the present specification, an occasion to intersect the optical axis at a position closer than a paraxial image point to an object point in spherical aberration where a position of the paraxial image point is the origin as shown in Fig. 1 is defined to be "making to be under". Incidentally, an occasion to intersect the optical axis at a position closer than a paraxial image point to an image point is defined to be "making to be over".

The expression "diffractive structure" used in the present specification means a portion where a relief is provided on a surface of the optical element so that the portion has a function to converge or diverge a light flux through diffraction. With respect to a shape of the relief, there is known a shape wherein ring-shaped zones in a shape of approximate concentric circles having their centers on an optical axis are formed on a surface of the optical element, and each ring-shaped zone looks like a saw tooth when its section is observed on a plane including the optical axis, and the shape like this is included, and this shape is called "diffractive ring-shaped zone" in particular.

The optical element in the present specification means, in a narrow sense, a lens (for example, an objective lens) having the light-converging function arranged at the position closest to the optical information recording medium to face that position under the condition that the optical information recording medium is loaded in an optical pickup apparatus, and it means, in a broad sense, a lens capable of being moved by an actuator at least in the direction of the optical axis together with the aforementioned lens. Therefore, numerical aperture NA of the optical element on the optical information recording medium side (image side) in the present specification means numerical aperture NA of the plane of the optical element positioned to be closest to the optical information recording medium. Further, it is assumed that necessary numerical aperture NA in the present specification means a numerical aperture prescribed by the standards of each optical information recording medium, or means a numerical aperture of the objective lens of diffraction limit power which can obtain a spot diameter necessary for conducting recording or reproducing of information in accordance with a wavelength of a working light source for each optical information recording medium.

In the present specification, the first optical information recording medium means a optical disc of a high density DVD system, and the second optical information recording medium includes various optical discs of a DVD system such as DVD-ROM and DVD-Video used exclusively for reproducing and various optical discs of a DVD system such as DVD-RAM, DVD-R and DVD-RW. The third optical information recording medium means an optical disc of a CD system such as CD-R and CD-RW.

(Embodiment of the invention)

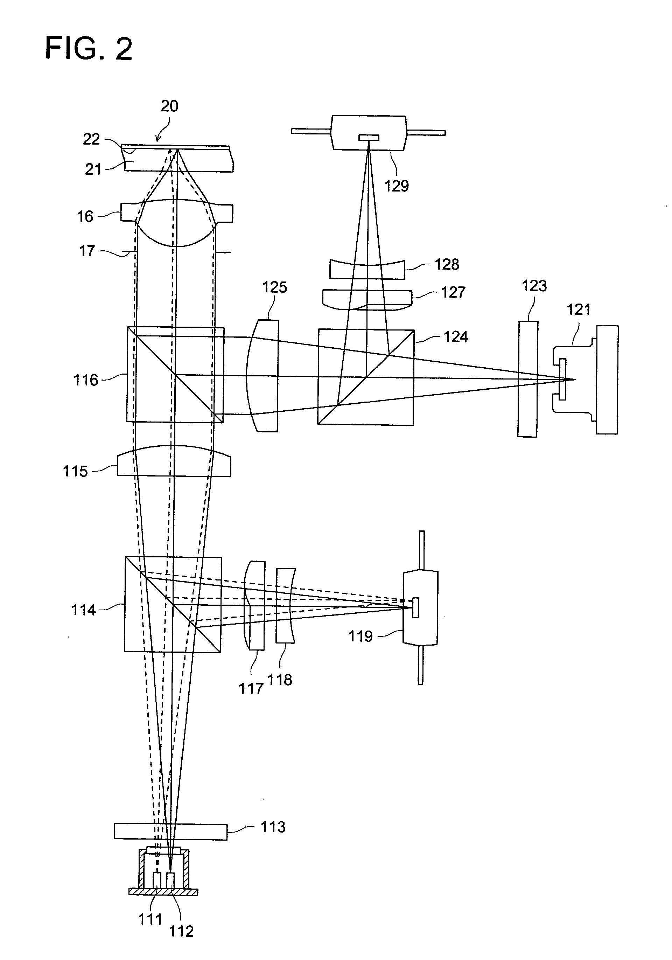

The invention will be explained as follows in a more detailed way, referring to the drawings. Fig. 2 is a schematic structure diagram of an optical information recording and reproducing device or an optical pickup apparatus relating to the first embodiment which can conduct recording and/or reproducing of information for all of a high density DVD (which is also called a first optical disc), a conventional DVD (which is also called a second optical disc) and a conventional CD (which is also called a third optical disc). Incidentally, in the present embodiment, first semiconductor laser 111 and second semiconductor laser 112 are arranged to adjoin each other on the same base board, and they construct a unit light source like the so-called two-laser one-package to correspond to optical pickup apparatus described respectively in Item (11) and Item (33).

In Fig. 2, a light flux emitted from the first semiconductor laser 111 (wavelength λ1 = 380 nm - 450 nm) representing the first light source is transmitted through 1/4 wavelength plate 113 and first beam splitter 114 and is transformed into a parallel light flux by collimator 115, and then, passes further through second beam splitter 116 to be narrowed further by diaphragm 17, and is converged by objective lens 16 representing a light-converging optical element on information recording surface 22 through protective layer 21 (thickness t1 is 0.5 - 0.7 mm and preferably is 0.6 mm) of the first optical disc 20.

The light flux modulated by information pits and reflected on the information recording surface is transmitted again through objective lens 16 and diaphragm 17, then, passes through second beam splitter 116 and collimator 115 and enters the first beam splitter 114 to be reflected thereon, then, is given astigmatism by cylindrical lens 117 and enters photodetector 119 through concave lens 118, thus, the output signals therefrom are used to obtain reading signals for information information-recorded on the first optical disc 20.

Further, a change in an amount of light caused by changes in forms and positions of a spot on the photodetector 119 is detected for detection of focusing and a track. Then, the objective lens 16 is moved so that a two-dimensional actuator (not shown) may make a light flux emitted from the first semiconductor laser 111 to form an image on the recording surface 22 of the first optical disc 20, based on the aforementioned detection, and the objective lens 16 is moved so that a light flux emitted from the semiconductor laser 111 may form an image on a prescribed track.

On the other hand, a light flux emitted from the second semiconductor laser 112 (wavelength $\lambda2 = 600$ nm - 700 nm) representing the second light source is transmitted through 1/4 wavelength plate 113 and first beam splitter 114 and is transformed into a parallel light flux by collimator 115, and then, passes further through second beam splitter 116 to be narrowed further by diaphragm 17, and is converged by objective lens 16 representing a light-converging optical element on information recording surface 22 through protective layer 21 (thickness t2 is 0.5 - 0.7 mm and preferably is 0.6 mm) of the second optical disc 20.

The light flux modulated by information pits and reflected on the information recording surface 22 is transmitted again through objective lens 16 and diaphragm 17, then, passes through second beam splitter 116 and collimator 115 and enters the first beam splitter 114 to be reflected thereon, then, is given astigmatism by cylindrical lens 117 and enters photodetector 119 through concave lens 118, thus, the output signals therefrom are used to obtain reading signals for information information-recorded on the second optical disc 20.

Further, a change in an amount of light caused by changes in forms and positions of a spot on the photodetector 119 is detected for detection of focusing and a track. Then, the objective lens 16 is moved so that a two-dimensional actuator (not shown) may make a light flux emitted from the second semiconductor laser 112 to form an image on the recording surface 22 of the second optical disc 20, based on the aforementioned detection, and the objective lens 16 is moved so that a light flux emitted from the semiconductor laser 112 may form an image on a prescribed track.

Further, a light flux emitted from the third semiconductor laser 121 (wavelength $\lambda3 = 700$ nm - 800 nm) representing the third light source is transmitted through 1/4 wavelength plate 123 and third beam splitter 124 and is transformed into a parallel light flux by collimator 125 representing a correcting element, and then, passes further through second beam splitter 116 to be narrowed further by diaphragm 17, and is converged by objective lens 16 on information recording surface 22 through protective layer 21 (thickness t3 is 1.1 - 1.3 mm and preferably is 1.2 mm) of the third optical disc 20.

The light flux modulated by information pits and reflected on the information recording surface 22 is transmitted again through objective lens 16 and diaphragm 17, then, enters second beam splitter 116 to be reflected thereon and passes through collimator 125 and enters the third beam splitter 124 to be reflected further thereon, then, is given astigmatism by cylindrical lens 127 and enters photodetector 129 through concave lens 128, thus, the output signals therefrom are used to obtain reading signals for information information-recorded on the third optical disc 20.

Further, a change in an amount of light caused by changes in forms and positions of a spot on the photodetector 129 is detected for detection of focusing and a track. Then, the objective lens 16 is moved so that a two-dimensional actuator (not shown) may make a light flux emitted from the third semiconductor laser 121 to form an image on the recording surface 22 of the third optical disc 20, based on the aforementioned detection, and the objective lens 16 is moved so that a light flux emitted from the semiconductor laser 121 may form an image on a prescribed track.

Incidentally, though the first light source and the second light source are arranged on the same base board in the embodiment stated above, the invention is not limited to this, and the second light source and the third light source may be arranged on the same base board, or, the first, second and third light sources may be arranged respectively at different positions, without being arranged on the same base board.

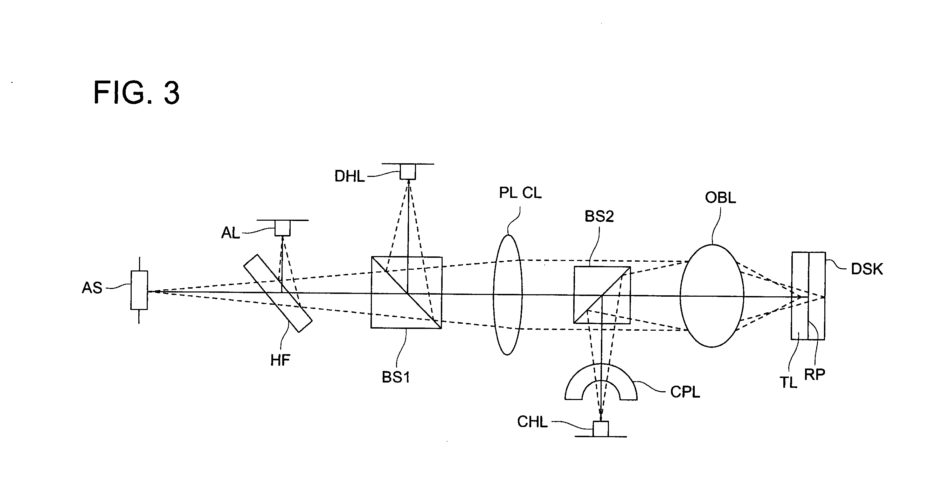

Fig. 3 is a schematic structure diagram of an optical information recording and reproducing device or an optical pickup apparatus relating to the second embodiment which can conduct recording and/or reproducing of information for all of a high density DVD (which is also called a first optical disc), a conventional DVD (which is also called a second optical disc) and a conventional CD (which is also called a third optical disc).

In Fig. 3, a light flux emitted from the first semiconductor laser AL (wavelength $\lambda1 = 380$ nm - 450 nm) representing the first light source is reflected on 1/4 wavelength plate HF and passes through first beam splitter BS1 to be transformed into a parallel light flux by collimator PLCL made of plastic, and then, passes further through second beam splitter BS2 and is converged by objective lens OBL representing a light-converging optical element on information recording surface RP through protective layer TL (thickness t1 is 0.5 - 0.7 mm and preferably is 0.6 mm) of the first optical disc DSK.

The light flux modulated by information pits and reflected on the information recording surface RP is transmitted again through objective lens OBL, and then, passes through second beam splitter BS2, collimator PLCL and first beam splitter BS1 to pass through 1/4 wavelength plate HF, and enters photodetector AS for the first light source, thus, the output signals therefrom are used to obtain reading signals for information information-recorded on the first optical disc DSK.

Further, a change in an amount of light caused by changes in forms and positions of a spot on the photodetector AS is detected for detection of focusing and a track. Then, the objective lens OBL is moved so that a two-dimensional actuator (not shown) may make a light flux emitted from the first semiconductor laser AL to form an image on the recording surface RP of the first optical disc DSK, based on the aforementioned detection, and the objective lens OBL is moved so that a light flux emitted from the semiconductor laser AL may form an image on a prescribed track.

On the other hand, a light flux emitted from the second semiconductor laser DHL (wavelength λ2 = 600 nm - 700 nm) representing the second light source and also representing hololaser is reflected on the first beam splitter BS1, and passes further through the second beam splitter BS2 after being transformed into a parallel light flux by collimator PLCL made of plastic, thus, it is converged by objective lens OBL representing a light-converging optical element on information recording surface RP through protective layer TL (thickness t2 is 0.5 - 0.7 mm and preferably is 0.6 mm) of the second optical disc DSK.

The light flux modulated by information pits and reflected on the information recording surface RP is transmitted again through objective lens OBL, then, passes through the second beam splitter BS2 and collimator PLCL and reflected on the first beam splitter BS1 to enter a photodetector (not shown) in the second semiconductor laser DHL, thus, the output signals therefrom are used to obtain reading signals for information information-recorded on the second optical disc DSK.

Further, a change in an amount of light caused by changes in forms and positions of a spot on the photodetector is detected for detection of focusing and a track. Then, the objective lens OBL is moved so that a two-dimensional actuator (not shown) may make a light flux emitted from the second semiconductor laser DHL to form an image on the recording surface RP of the second optical disc DSK, based on the aforementioned detection, and the objective lens OBL is moved so that a light flux emitted from the semiconductor laser DHL may form an image on a prescribed track.

Furthermore, a light flux emitted from the third semiconductor laser CHL (wavelength λ3 = 700 nm - 800 nm) representing the third light source and also representing hololaser passes through coupling lens CPL, then, reflected by the second beam splitter BS2 to enter objective lens 16 representing a light-converging optical element under the condition of divergence constraint, by which the light flux is converged on information recording surface RP through protective layer TL (thickness t3 is 1.1 - 1.3 mm and preferably is 1.2 mm) of the third optical disc DSK.

The light flux modulated by information pits and reflected on the information recording surface RP is transmitted again through objective lens OBL, and then, it enters the second beam splitter BS2 to be reflected thereon, and is converged by coupling lens CPL to enter photodetector (not shown) in the third semiconductor laser CHL, thus, the output signals therefrom are used to obtain reading signals for information information-recorded on the third optical disc DSK.

Further, a change in an amount of light caused by changes in forms and positions of a spot on the photodetector is detected for detection of focusing and a track. Then, the objective lens OBL is moved so that a two-dimensional actuator (not shown) may make a light flux emitted from the third semiconductor laser CHL to form an image on the recording surface RP of the third optical disc DSK, based on the aforementioned detection, and the objective lens OBL is moved so that a light flux emitted from the semiconductor laser CHL may form an image on a prescribed track.

In the present embodiment, it is possible to use coupling lens CPL as an opening regulating element by providing on an optical surface of coupling lens CPL a light-shielding film having a circular non-film portion (a circular region where a film whose center is on an optical axis is not formed) corresponding to the numerical aperture that makes it possible to conduct recording and/or reproducing of information properly on information recording surface RP of the third optical disc DSK, and thereby by making a light flux with wavelength λ3 to pass through only the circular non-film portion. (see Items 46 and 49).

As a variation, however, it is also possible to provide, as an opening regulating element, a dichroic filter that has a circular non-film portion corresponding to the numerical aperture capable of conducting recording and/or reproducing of information properly on information recording surface RP of the third optical disk DSK and is equipped with a dichroic coat between, for example, the second beam splitter BS2 and objective lens OBL, in place of providing a light-shielding film on coupling lens CPL. In this case, the dichroic coat functions to prevent passage of only the light flux with wavelength λ3 emitted from the third semiconductor laser CHL (see Item 47).

Further, as another variation, it is also possible to provide, as an opening regulating element, a dichroic prism on which a dichroic coat having a circular non-film portion corresponding to the numerical aperture capable of conducting recording and/or reproducing of information properly on information recording surface RP of the third optical disk DSK, in an optical path for light with wavelength λ3, for example, in place of providing a light-shielding film on coupling lens CPL. In this case, the dichroic coat functions to prevent passage of only the light flux with wavelength λ3 emitted from the third semiconductor laser CHL (see Item 51).

Further, as still another variation, it is also possible to form a dichroic coat having a circular non-film portion corresponding to the numerical aperture capable of conducting recording and/or reproducing of information properly on information recording surface RP of the third optical disk DSK, on an optical surface of objective lens OBL, for example, in place of providing a light-shielding film on coupling lens CPL. In this case, a region having the dichroic coat functions as a second region because it prevents passage of only the light flux with wavelength λ3 emitted from the third semiconductor laser CHL, while, the circular non-film portion functions as the first region (see Item 50). In this case, a diffractive structure is not provided on the region where the dichroic coat is provided (see Item 51).

In the present embodiment, a diffractive structure is provided on the circular non-film portion of objective lens OBL to correct chromatic aberration for a light flux emitted from the first semiconductor laser AL or the second semiconductor laser DHL (see Items 37 and 38). Namely, the objective lens OBL constitutes the first chromatic aberration. correcting element or the second chromatic aberration correcting element. Incidentally, as a variation, in place of providing a diffractive structure on a circular non-film portion of objective lens OBL, there may also be provided a diffractive structure equipped with the same chromatic aberration function on the region of collimator PLCL corresponding to the foregoing. Further, as another variation, it is also possible to arrange so that not only reflected light of a light flux with wavelength λ1 emitted from the first semiconductor laser AL but also reflected light of a light flux with wavelength λ2 emitted from the second semiconductor laser DHL are detected, in place of making the second semiconductor laser DHL to be hololaser. Incidentally, though beam shaping is not conducted in the present embodiment, it is possible to shape a beam for the light flux with wavelength λ1 or the light flux with wavelength λ2, by arranging, as a variation, a beam shaper to be closer to the light source than collimator PLCL through which the light flux with wavelength λ1 and the light flux with wavelength λ2 pass (see Items 64, 66). It is also possible to make collimator PLCL to have a function of beam shaping. The beam shaper, in this case, means an optical element having a function to make a light flux whose section is oval to enter and to make it to emerge after shaping it to have a circular section.

However, it is also possible to provide the second diffractive structure at a region corresponding to the numerical aperture capable of conducting recording and/or reproducing of information properly on information recording surface RP of the third optical disk DSK, on an optical surface of objective lens OBL, for example, in place of providing a dichroic coat. In this case, an optical surface of the objective lens OBL has a first region through which the light fluxes having respectively wavelengths λ1, λ2 and λ3 emitted respectively from the first semiconductor laser AL, the second semiconductor laser DHL and the third semiconductor laser CHL are made to pass for conducting recording and/or reproducing for the first optical disk, the second optical disk and the third optical disk and a second region through which the light fluxes having respectively wavelengths λ1 and λ2 emitted respectively from the first semiconductor laser AL and the second semiconductor laser DHL are made to pass to be converged on information recording surfaces for conducting recording and/or reproducing for the first optical disk and the second optical disk, and the light flux with wavelength λ3 is made to pass not to be converged on an information recording surface, and the first diffractive structure is provided on the first region and the second diffractive structure is provided on the second region, and the following expression holds under the assumption that n1A represents the order number of diffracted light having the maximum diffraction efficiency among diffracted light with wavelength λ1 generated by the first diffractive structure, n1D represents the order number of diffracted light having the maximum diffraction efficiency among diffracted light with wavelength λ2 generated by the first diffractive structure, n2A represents the order number of diffracted light having the maximum diffraction efficiency among diffracted light with wavelength λ1 generated by the second diffractive structure, and n2D represents the order number of diffracted light having the maximum diffraction efficiency among diffracted light with wavelength λ2 generated by the second diffractive structure, and n2A is an odd number (refer Item 18).

$$N1A : n1D = n2A : n2D \qquad\qquad (10)$$

Further, at this time, it may be preferable tha n2A = 5, n2D = 3 (refer Item 19), or n2A = 3, n2D = 2 (refer Item 20). Further, among diffracted rays having a wavelength λ3 generated by the second diffractive structure, the maximum diffraction efficiency is 60% or less (refer Item 21).

However, if N1A : n1D ≠ n2A : n2D, n2A is not limited to an odd number (refer Item 17).

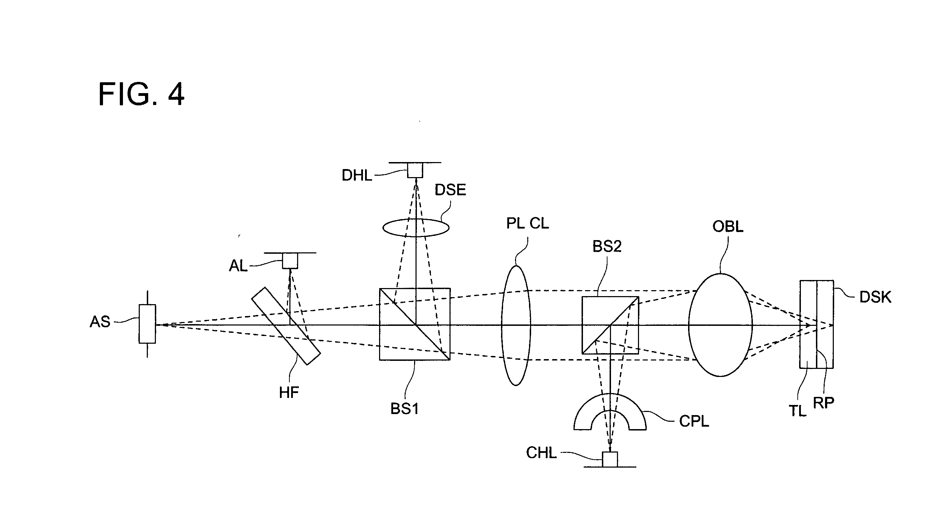

Fig. 4 is a schematic structure diagram of an optical information recording and reproducing device or an optical pickup apparatus relating to the third embodiment capable of conducting recording and/or reproducing of information for all of high density DVD (which is also called a first optical disc), conventional DVD (which is also called a second optical disc) and CD (which is also called a third optical disc). Incidentally, since only difference between the present embodiment and the embodiment in Fig. 3 is that chromatic aberration correcting optical element DSE that is provided with a diffractive structure for conducting chromatic aberration correction for the light flux with wavelength λ2 emitted from the second semiconductor laser DHL is arranged between the second semiconductor laser DHL and the first beam splitter BS1 (on the optical path through which the light flux with wavelength λ2 only passes), and therefore, an explanation for the other points will be omitted because they are the same as those in the embodiment (including variations) shown in Fig. 3. Incidentally, it is possible to correct chromatic aberration for the light flux emitted from the first semiconductor laser AL, by providing a diffractive structure on objective lens OBL or collimator PLCL which is present on the optical path through which the light flux with wavelength λ1 and the light flux with wavelength λ2 pass (see Item 59, 61). It is also possible to conduct chromatic aberration correction for the light flux emitted from the second semiconductor laser DHL with a diffractive structure on the objective lens OBL, and to conduct chromatic aberration correction for the light flux emitted from the first semiconductor laser AL with a diffractive structure on the collimator PLCL.

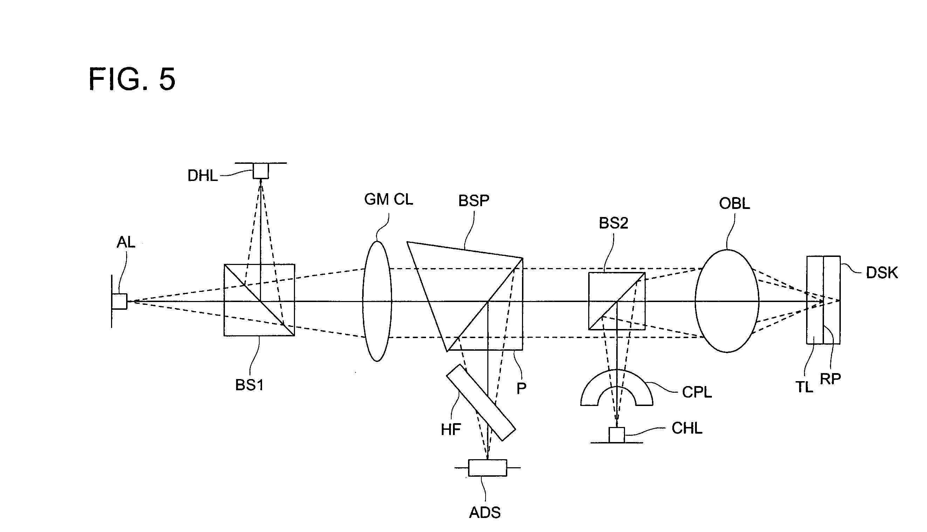

Fig. 5 is a schematic structure diagram of an optical information recording and reproducing device or an optical pickup apparatus relating to the fourth embodiment capable of conducting recording and/or reproducing of information for all of high density DVD (which is also called a first optical disc), conventional DVD (which is also called a second optical disc) and CD (which is also called a third optical disc).

In Fig. 5, a light flux emitted from the first semiconductor laser AL (wavelength λ1 = 380 nm - 450 nm) representing the first light source passes through the first beam splitter BS1 to be converted into a parallel light flux by collimator GMCL made of glass mold, and enters beam shaping prism BSP to be shaped, and passes further through prism P and second beam splitter BS2 to be converged on information recording surface RP through protective layer TL (thickness t1 is 0.5 - 0.7 mm and preferably is 0.6 mm) of the first optical disk DSK by objective lens OBL representing a light-converging optical element.

The light flux modulated by information pits and reflected on the information recording surface RP is transmitted again through objective lens OBL, then, passes through second beam splitter BS2, and is reflected by prism P to pass through 1/4 wavelength plate HF and enters photodetector ADS, thus, the output signals therefrom are used to obtain reading signals for information information-recorded on the first optical disc DSK.

Further, a change in an amount of light caused by changes in forms and positions of a spot on the photodetector ADS is detected for detection of focusing and detection of a track. Then, the objective lens OBL is moved so that a two-dimensional actuator (not shown) may make a light flux emitted from the first semiconductor laser AL to form an image on the recording surface RP of the first optical disc DSK, based on the aforementioned detection, and the objective lens OBL is moved so that a light flux emitted from the semiconductor laser AL may form an image on a prescribed track.

On the other hand, a light flux emitted from the second semiconductor laser DL (wavelength λ2 = 600 nm - 700 nm) representing the second light source is reflected on the first beam splitter BS1, then, it is shaped when it further passes through beam shaping prism BSP after being transformed into a parallel light flux by collimator GMCL, and passes through the second beam splitter BS2, thus, it is converged by objective lens OBL representing a light-converging optical element on information recording surface RP through protective layer TL (thickness t2 is 0.5 - 0.7 mm and preferably is 0.6 mm) of the second optical disc DSK.

The light flux modulated by information pits and reflected on the information recording surface RP is transmitted again through objective lens OBL, then, passes through the second beam splitter BS2, and reflected on the prism P and passes through 1/4 wavelength plate HF to enter a photodetector ADS, thus, the output signals therefrom are used to obtain reading signals for information information-recorded on the second optical disc DSK.

Further, a change in an amount of light caused by changes in forms and positions of a spot on the photodetector ADS is detected for detection of focusing and detection of a track. Then, the objective lens OBL is moved so that a two-dimensional actuator (not shown) may make a light flux emitted from the second semiconductor laser DL to form an image on the recording surface RP of the second optical disc DSK, based on the aforementioned detection, and the objective lens OBL is moved so that a light flux emitted from the semiconductor laser DL may form an image on a prescribed track.

Furthermore, a light flux emitted from the third semiconductor laser CHL (wavelength λ3 = 700 nm - 800 nm) representing the third light source and also representing hololaser passes through coupling lens CPL, then, reflected by the second beam splitter BS2 to enter objective lens 16 representing a light-converging optical element under the condition of divergence constraint, by which the light flux is converged on information recording surface RP through protective layer TL (thickness t3 is 1.1 - 1.3 mm and preferably is 1.2 mm) of the third optical disc DSK.

The light flux modulated by information pits and reflected on the information recording surface RP is transmitted again through objective lens OBL, then, enters the second beam splitter BS2 where the light flux is reflected, and is converged by coupling lens CPL to enter a photodetector (not shown) in the third semiconductor laser CHL, thus, the output signals therefrom are used to obtain reading signals for information information-recorded on the third optical disc DSK.

Further, a change in an amount of light caused by changes in forms and positions of a spot on the photodetector is detected for detection of focusing and detection of a track. Then, the objective lens OBL is moved so that a two-dimensional actuator (not shown) may make a light flux emitted from the third semiconductor laser CHL to form an image on the recording surface RP of the third optical disc DSK, based on the aforementioned detection, and the objective lens OBL is moved so that a light flux emitted from the semiconductor laser CHL may form an image on a prescribed track.

In the present embodiment, it is possible to use coupling lens CPL as an opening regulating element by providing on an optical surface of coupling lens CPL a light-shielding film having a circular non-film portion (a circular region where a film whose center is on an optical axis is not formed) corresponding to the numerical aperture that makes it possible to conduct recording and/or reproducing of information properly on information recording surface RP of the third optical disc DSK, and thereby by making a light flux with wavelength λ3 to pass through only the circular non-film portion (see Items 48 and 51).

As a variation, however, it is also possible to provide, as an opening regulating element, a dichroic filter that has a circular non-film portion corresponding to the numerical aperture capable of conducting recording and/or reproducing of information properly on information recording surface RP of the third optical disk DSK and is equipped with a dichroic coat between, for example, the second beam splitter BS2 and objective lens OBL, in place of providing a light-shielding film on coupling lens CPL. In this case, the dichroic coat functions to prevent passage of only the light flux with wavelength λ3 emitted from the third semiconductor laser CHL (see Item 49).

Further, as another variation, it is also possible to provide, as an opening regulating element, a dichroic prism on which a dichroic coat having a circular non-film portion corresponding to the numerical aperture capable of conducting recording and/or reproducing of information properly on information recording surface RP of the third optical disk DSK, in an optical path for light with wavelength λ3, for example, in place of providing a light-shielding film on coupling lens CPL. In this case, the dichroic coat functions to prevent passage of only the light flux with wavelength λ3 emitted from the third semiconductor laser CHL (see Item 50).

Further, as still another variation, it is also possible to form a dichroic coat having a circular non-film portion corresponding to the numerical aperture capable of conducting recording and/or reproducing of information properly on information recording surface RP of the third optical disk DSK, on an optical surface of objective lens OBL, for example, in place of providing a light-shielding film on coupling lens CPL. In this case, a region having the dichroic coat functions as a second region because it prevents passage of only the light flux with wavelength λ3 emitted from the third semiconductor laser CHL, while, the circular non-film portion functions as the first region (see Item 51). In this case, a diffractive structure is not provided on the region where the dichroic coat is provided (see Item 52).

In the present embodiment, a diffractive structure is provided on the circular non-film portion of objective lens OBL to correct chromatic aberration for a light flux emitted from the first semiconductor laser AL or the second semiconductor laser DL (see Item 64). Namely, the objective lens OBL constitutes the first chromatic aberration correcting element or the second chromatic aberration correcting element. Incidentally, as a variation, in place of providing a diffractive structure on a circular non-film portion of objective lens OBL, there may also be provided a diffractive structure equipped with the same chromatic aberration function on the region of collimator GMCL corresponding to the foregoing. Further, in the present embodiment, beam shaping prism BSP is arranged between collimator GMCL and objective lens OBL on the optical path through which a light flux with wavelength λ1 and a light flux with wavelength λ2 pass commonly, so that beam shaping may be conducted for a light flux emitted from the first semiconductor laser AL and a light flux emitted from the second semiconductor laser DL (see Item 66).

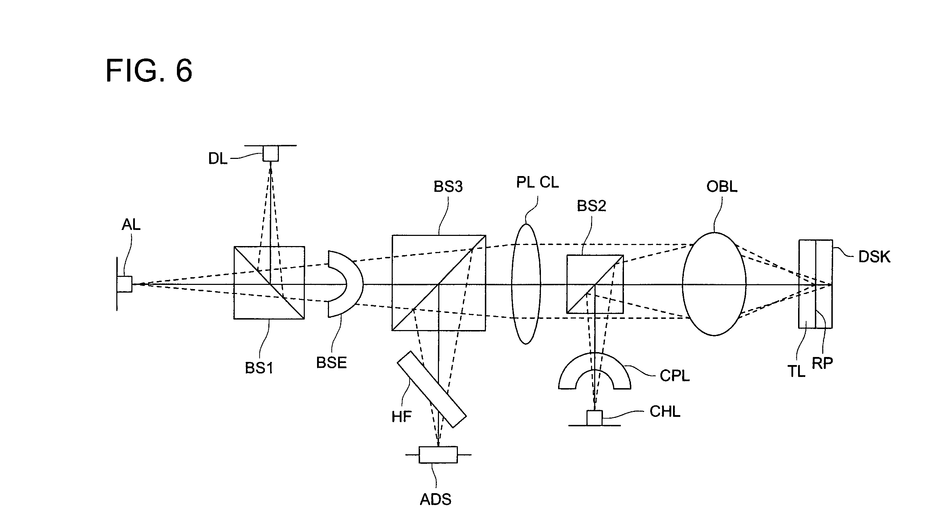

Fig. 6 is a schematic structure diagram of an optical information recording and reproducing device or an optical pickup apparatus relating to the fifth embodiment which can conduct recording and/or reproducing of information for all of a high density DVD (which is also called a first optical disc), a conventional DVD (which is also called a second optical disc) and a conventional CD (which is also called a third optical disc).

In Fig. 6, a light flux emitted from the first semiconductor laser AL (wavelength λ1 = 380 nm - 450 nm) representing the first light source passes through the first beam splitter BS1 and is shaped by beam shaper BSE, and then, passes through the third beam splitter BS3 to be transformed into a parallel light flux by collimator PLCL, and passes further through the second beam splitter BS2 to enter objective lens OBL representing a light-converging optical element, thus, it is converged on information recording surface RP through protective layer TL (thickness t1 is 0.5-0.7 mm and preferably is 0.6 mm) of the first optical disc DSK.

The light flux modulated by information pits and reflected on the information recording surface RP is transmitted again through objective lens OBL, then, passes through second beam splitter BS2 and collimator PLCL, and is reflected by third beam splitter BS3 to pass through 1/4 wavelength plate HF and enters photodetector ADS, thus, the output signals therefrom are used to obtain reading signals for information information-recorded on the first optical disc DSK.

Further, a change in an amount of light caused by changes in forms and positions of a spot on the photodetector ADS is detected for detection of focusing and detection of a track. Then, the objective lens OBL is moved so that a two-dimensional actuator (not shown) may make a light flux emitted from the first semiconductor laser AL to form an image on the recording surface RP of the first optical disc DSK, based on the aforementioned detection, and the objective lens OBL is moved so that a light flux emitted from the semiconductor laser AL may form an image on a prescribed track.

On the other hand, a light flux emitted from the second semiconductor laser DL (wavelength λ2 = 600 nm - 700 nm) representing the second light source is reflected on the first beam splitter BS1 and is beam-shaped by beam shaper BSE, then, passes through the third beam splitter BS3 to be transformed into a parallel light flux by collimator PLCL made of plastic, and further passes through the second beam splitter BS2 to enter objective lens OBL representing a light-converging optical element, thus, it is converged on information recording surface RP through protective layer TL (thickness t2 is 0.5 - 0.7 mm and preferably is 0.6 mm) of the second optical disc DSK.

The light flux modulated by information pits and reflected on the information recording surface RP is transmitted again through objective lens OBL, then, passes through second beam splitter BS2 and collimator PLCL, and is reflected by third beam splitter BS3 to pass through 1/4 wavelength plate HF and enters photodetector ADS, thus, the output signals therefrom are used to obtain reading signals for information information-recorded on the first optical disc DSK.

Further, a change in an amount of light caused by changes in forms and positions of a spot on the photodetector ADS is detected for detection of focusing and detection of a track. Then, the objective lens OBL is moved so that a two-dimensional actuator (not shown) may make a light flux emitted from the second semiconductor laser DHL to form an image on the recording surface RP of the second optical disc DSK, based on the aforementioned detection, and the objective lens OBL is moved so that a light flux emitted from the semiconductor laser DHL may form an image on a prescribed track.

Furthermore, a light flux emitted from the third semiconductor laser CHL (wavelength $\lambda 3$ = 700 nm - 800 nm) representing the third light source and also representing hololaser passes through coupling lens CPL, then, reflected by the second beam splitter BS2 to enter objective lens 16 representing a light-converging optical element under the condition of divergence constraint, by which the light flux is converged on information recording surface RP through protective layer TL (thickness t3 is 1.1 - 1.3 mm and preferably is 1.2 mm) of the third optical disc DSK.

The light flux modulated by information pits and reflected on the information recording surface RP is transmitted again through objective lens OBL, and then, it enters the second beam splitter BS2 to be reflected thereon, and is converged by coupling lens CPL to enter photodetector (not shown) in the third semiconductor laser CHL, thus, the output signals therefrom are used to obtain reading signals for information information-recorded on the third optical disc DSK.

Further, a change in an amount of light caused by changes in forms and positions of a spot on the photodetector is detected for detection of focusing and a track. Then, the objective lens OBL is moved so that a two-dimensional actuator (not shown) may make a light flux emitted from the third semiconductor laser CHL to form an image on the recording surface RP of the third optical disc DSK, based on the aforementioned detection, and the objective lens OBL is moved so that a light flux emitted from the semiconductor laser CHL may form an image on a prescribed track.

In the present embodiment, it is possible to use coupling lens CPL as an opening regulating element by providing on an optical surface of coupling lens CPL a light-shielding film having a circular non-film portion (a circular region where a film whose center is on an optical axis is not formed) corresponding to the numerical aperture that makes it possible to conduct recording and/or reproducing of information properly on information recording surface RP of the third optical disc DSK, and thereby by making a light flux with wavelength $\lambda 3$ to pass through only the circular non-film portion.

As a variation, however, it is also possible to provide, as an opening regulating element, a dichroic filter that has a circular non-film portion corresponding to the numerical aperture capable of conducting recording and/or reproducing of information properly on information recording surface RP of the third optical disk DSK and is equipped with a dichroic coat between, for example, the second beam splitter BS2 and objective lens OBL, in place of providing a light-shielding film on coupling lens CPL. In this case, the dichroic coat functions to prevent passage of only the light flux with wavelength $\lambda 3$ emitted from the third semiconductor laser CHL.

Further, as another variation, it is also possible to provide, as an opening regulating element, a dichroic prism on which a dichroic coat having a circular non-film portion corresponding to the numerical aperture capable of conducting recording and/or reproducing of information properly on information recording surface RP of the third optical disk DSK, in an optical path for light with wavelength $\lambda 3$, for example, in place of providing a light-shielding film on coupling lens CPL. In this case, the dichroic coat functions to prevent passage of only the light flux with wavelength $\lambda 3$ emitted from the third semiconductor laser CHL.

Further, as still another variation, it is also possible to form a dichroic coat having a circular non-film portion corresponding to the numerical aperture capable of conducting recording and/or reproducing of information properly on information recording surface RP of the third optical disk DSK, on an optical surface of objective lens OBL, for example, in place of providing a light-shielding film on coupling lens CPL. In this case, a region having the dichroic coat functions as a second region because it prevents passage of only the light flux with wavelength $\lambda 3$ emitted from the third semiconductor laser CHL, while, the circular non-film portion functions as the first region. In this case, a diffractive structure is not provided on the region where the dichroic coat is provided.

In the present embodiment, a diffractive structure is provided on the circular non-film portion of objective lens OBL to correct chromatic aberration for a light flux emitted from the first semiconductor laser AL or the second semiconductor laser DHL. Namely, the objective lens OBL constitutes the first chromatic aberration correcting element or the second chromatic aberration correcting element. Incidentally, as its variation, in place of providing a diffractive structure on a circular non-film portion of objective lens OBL, there may also be provided a diffractive structure equipped with the same chromatic aberration function on the region of collimator PLCL or of beam shaper BSE corresponding to the foregoing.

Further, in the present embodiment, beam shaper BSE is arranged to be closer than collimator PLCL to the light source on the optical path through which a light flux with wavelength $\lambda 1$ and a light flux with wavelength $\lambda 2$ pass

commonly, and thereby, beam shaping is conducted for each of a light flux emitted from the first semiconductor laser AL and a light flux emitted from the second semiconductor laser DL.

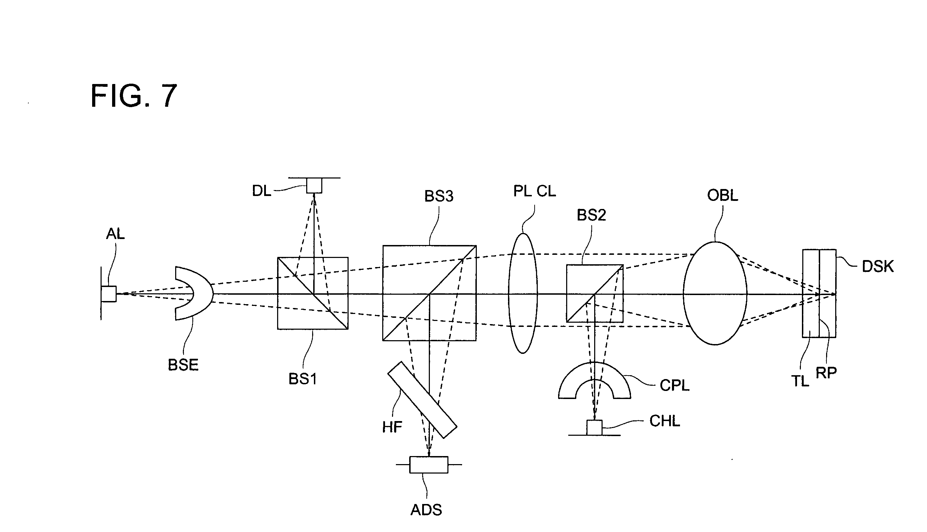

Fig. 7 is a schematic structure diagram of an optical information recording and reproducing device or an optical pickup apparatus relating to the sixth embodiment which can conduct recording and/or reproducing of information for all of a high density DVD (which is also called a first optical disc), a conventional DVD (which is also called a second optical disc) and a conventional CD (which is also called a third optical disc). Incidentally, since only difference between the present embodiment and the embodiment in Fig. 6 is that beam shaper BSE is arranged between the second semiconductor laser DHL and the first beam splitter BS1, and other points are the same as those in the embodiment in Fig. 6 (including variations), an explanation will be omitted. Though beam shaping is carried out only for the light flux with wavelength λ1 in the present embodiment, if a second beam shaper (not shown) is arranged between the first beam splitter BS1 and the second semiconductor laser DL, it is possible to conduct beam shaping also for the light flux with wavelength λ2.

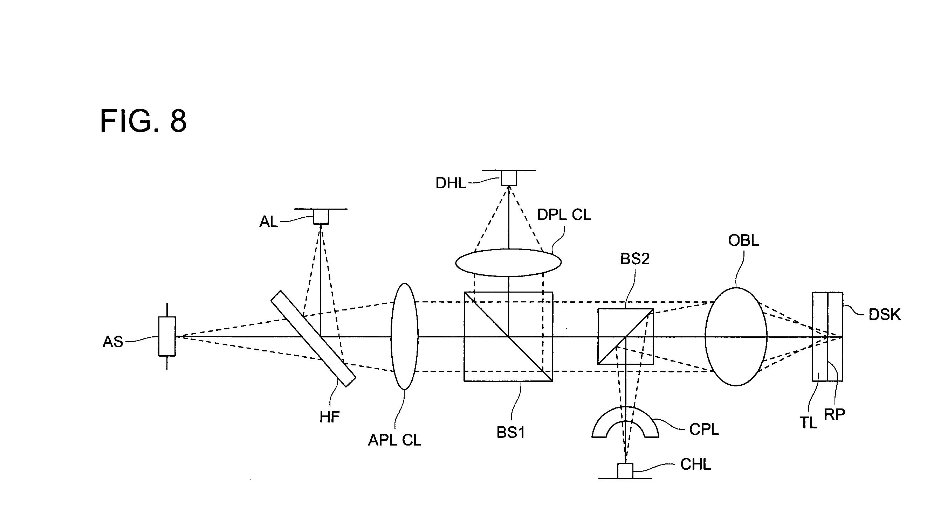

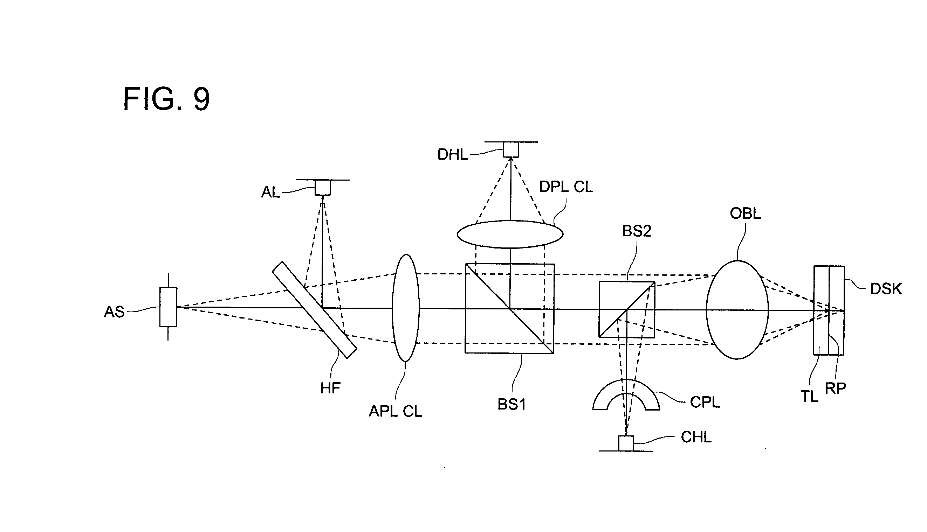

Fig. 8 is a schematic structure diagram of an optical information recording and reproducing device or an optical pickup apparatus relating to the seventh embodiment which can conduct recording and/or reproducing of information for all of a high density DVD (which is also called a first optical disc), a conventional DVD (which is also called a second optical disc) and a conventional CD (which is also called a third optical disc). Incidentally, only difference between the present embodiment and the embodiment shown in Fig. 3 is that the common collimator is abolished, first collimator APLC that is made of plastic and is exclusive for a light flux emitted from the first light source is arranged between the first semiconductor laser AL and the first beam splitter BS1, and second collimator DPLCL that is made of plastic and is exclusive for a light flux emitted from the second light source is arranged between the second semiconductor laser DHL and the first beam splitter BS1. Due to this, it is possible to conduct correction of chromatic aberration for the light flux with wavelength λ1 by providing a diffractive structure on the first collimator APLCL through which only the light flux with wavelength λ1 passes, and to conduct correction of chromatic aberration for the light flux with wavelength λ2 by providing a diffractive structure on the second collimator DPLCL through which only the light flux with wavelength λ2 passes (see Items 62, 63 and 64). Incidentally, providing the diffractive structure for chromatic aberration correction on each of a collimator exclusive for a light flux with wavelength λ1 and a collimator exclusive for a light flux with wavelength λ2 can also be applied to embodiments shown in Figs. 9 - 13 which will be described later. With respect to the points other than that are the same as those in the embodiment (including variations) in Fig. 3, and an explanation will be omitted accordingly.

Fig. 9 is a schematic structure diagram of an optical information recording and reproducing device or an optical pickup apparatus relating to the eighth embodiment which can conduct recording and/or reproducing of information for all of a high density DVD (which is also called a first optical disc), a conventional DVD (which is also called a second optical disc) and a conventional CD (which is also called a third optical disc). Incidentally, only difference between the present embodiment and the embodiment shown in Fig. 8 is that a diffractive structure is provided on the collimator DPLCL made of plastic that is exclusive of the light flux emitted from the second light source so that correction of chromatic aberration may be conducted for the light flux with wavelength λ2. In this case, it is preferable that a diffractive structure is provided on objective lens OBL so that correction of chromatic aberration may be conducted for the light flux with wavelength λ1. With respect to the points other than that are the same as those in the embodiment (including variations) in Fig. 3 or Fig. 8, and an explanation will be omitted accordingly.

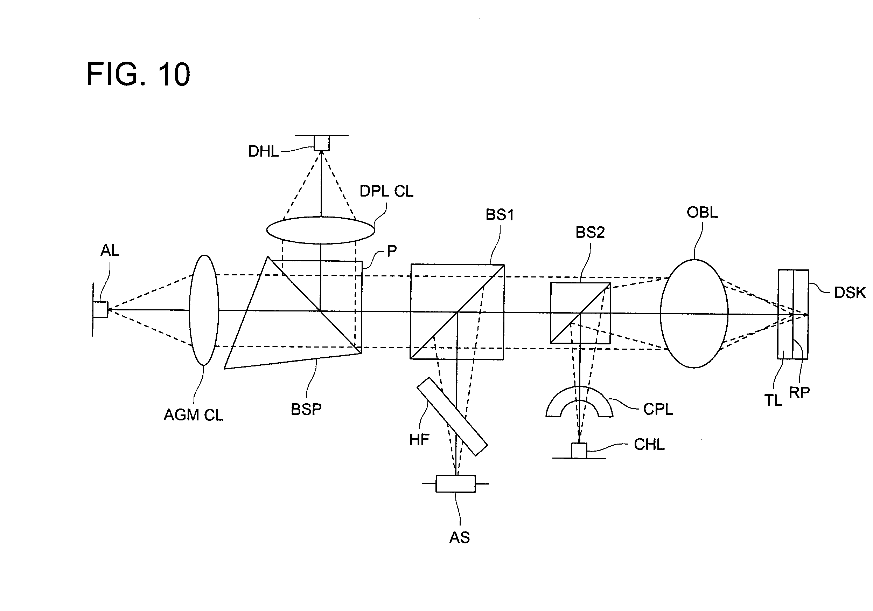

Fig. 10 is a schematic structure diagram of an optical information recording and reproducing device or an optical pickup apparatus relating to the ninth embodiment which can conduct recording and/or reproducing of information for all of a high density DVD (which is also called a first optical disc), a conventional DVD (which is also called a second optical disc) and a conventional CD (which is also called a third optical disc).

In Fig. 10, a light flux emitted from the first semiconductor laser AL (wavelength λ1 = 380 nm - 450 nm) representing the first light source is transformed into a parallel light flux by first collimator AGMCL made through glass mold, then, is beam-shaped by first beam shaping prism BSP (see Item 72), and passes through prism P, first beam splitter BS1 and second beam splitter BS2 to enter objective lens OBL representing a light-converging optical element, thus, it is converged on information recording surface RP through protective layer TL (thickness t1 is 0.5 - 0.7 mm and preferably is 0.6 mm) of the first optical disc DSK.

The light flux modulated by information pits and reflected on the information recording surface RP is transmitted again through objective lens OBL, and then, it passes through the second beam splitter BS2 and is reflected by the first beam splitter BS1, and it passes through 1/4 wavelength plate HF to enter photodetector AS, thus, the output signals therefrom are used to obtain reading signals for information information-recorded on the first optical disc DSK.

Further, a change in an amount of light caused by changes in forms and positions of a spot on the photodetector AS is detected for detection of focusing and a track. Then, the objective lens OBL is moved so that a two-dimensional actuator (not shown) may make a light flux emitted from the first semiconductor laser AL to form an image on the recording surface RP of the first optical disc DSK, based on the aforementioned detection, and the objective lens OBL is moved so that a light flux emitted from the semiconductor laser AL may form an image on a prescribed track.

On the other hand, a light flux emitted from the second semiconductor laser DHL (wavelength λ2 = 600 nm - 700 nm) representing the second light source and also representing hololaser is transformed into a parallel light flux by the second collimator DPLCL made of plastic, and is reflected on prism P and passes through the first beam splitter BS1 and the second beam splitter BS2 to enter objective lens OBL representing a light-converging optical element to be converged on information recording surface RP through protective layer TL (thickness t2 is 0.5 - 0.7 mm and preferably is 0.6 mm) of the second optical disc DSK.

The light flux modulated by information pits and reflected on the information recording surface RP is transmitted again through objective lens OBL, then, passes through the second beam splitter BS2 and the first beam splitter BS1, then, reflected on prism P and passes through the second collimator DPLCL to enter the photodetector (not shown) in the second semiconductor laser DHL, thus, the output signals therefrom are used to obtain reading signals for information information-recorded on the second optical disc DSK.

Further, a change in an amount of light caused by changes in forms and positions of a spot on the photodetector is detected for detection of focusing and a track. Then, the objective lens OBL is moved so that a two-dimensional actuator (not shown) may make a light flux emitted from the second semiconductor laser DHL to form an image on the recording surface RP of the second optical disc DSK, based on the aforementioned detection, and the objective lens OBL is moved so that a light flux emitted from the semiconductor laser DHL may form an image on a prescribed track.

Furthermore, a light flux emitted from the third semiconductor laser CHL (wavelength λ3 = 700 nm - 800 nm) representing the third light source and also representing hololaser passes through coupling lens CPL, then, reflected by the second beam splitter BS2 to enter objective lens 16 representing a light-converging optical element under the condition of divergence constraint, by which the light flux is converged on information recording surface RP through protective layer TL (thickness t3 is 1.1 - 1.3 mm and preferably is 1.2 mm) of the third optical disc DSK.

The light flux modulated by information pits and reflected on the information recording surface RP is transmitted again through objective lens OBL, and then, it enters the second beam splitter BS2 to be reflected thereon, and is converged by coupling lens CPL to enter photodetector (not shown) in the third semiconductor laser CHL, thus, the output signals therefrom are used to obtain reading signals for information information-recorded on the third optical disc DSK.

Further, a change in an amount of light caused by changes in forms and positions of a spot on the photodetector is detected for detection of focusing and a track. Then, the objective lens OBL is moved so that a two-dimensional actuator (not shown) may make a light flux emitted from the third semiconductor laser CHL to form an image on the recording surface RP of the third optical disc DSK, based on the aforementioned detection, and the objective lens OBL is moved so that a light flux emitted from the semiconductor laser CHL may form an image on a prescribed track.

In the present embodiment, it is possible to use coupling lens CPL as an opening regulating element by providing on an optical surface of coupling lens CPL a light-shielding film having a circular non-film portion (a circular region where a film whose center is on an optical axis is not formed) corresponding to the numerical aperture that makes it possible to conduct recording and/or reproducing of information properly on information recording surface RP of the third optical disc DSK, and thereby by making a light flux with wavelength λ3 to pass through only the circular non-film portion.

As a variation, however, it is also possible to provide, as an opening regulating element, a dichroic filter that has a circular non-film portion corresponding to the numerical aperture capable of conducting recording and/or reproducing of information properly on information recording surface RP of the third optical disk DSK and is equipped with a dichroic coat between, for example, the second beam splitter BS2 and objective lens OBL, in place of providing a light-shielding film on coupling lens CPL. In this case, the dichroic coat functions to prevent passage of only the light flux with wavelength λ3 emitted from the third semiconductor laser CHL.

Further, as another variation, it is also possible to provide, as an opening regulating element, a dichroic prism on which a dichroic coat having a circular non-film portion corresponding to the numerical aperture capable of conducting recording and/or reproducing of information properly on information recording surface RP of the third optical disk DSK, in an optical path for light with wavelength λ3, for example, in place of providing a light-shielding film on coupling lens CPL. In this case, the dichroic coat functions to prevent passage of only the light flux with wavelength λ3 emitted from the third semiconductor laser CHL.

Further, as still another variation, it is also possible to form a dichroic coat having a circular non-film portion corresponding to the numerical aperture capable of conducting recording and/or reproducing of information properly on information recording surface RP of the third optical disk DSK, on an optical surface of objective lens OBL, for example, in place of providing a light-shielding film on coupling lens CPL. In this case, a region having the dichroic coat functions as a second region because it prevents passage of only the light flux with wavelength λ3 emitted from the third semiconductor laser CHL, while, the circular non-film portion functions as the first region. In this case, a diffractive structure is not provided on the region where the dichroic coat is provided.

In the present embodiment, chromatic aberration of the light flux emitted from the first semiconductor laser AL is corrected by providing a diffractive structure on the first collimator APLCL, and chromatic aberration of the light flux emitted from the second semiconductor laser DHL is corrected by providing a diffractive structure on the second collimator DPLCL. Incidentally, it is also possible to provide a diffractive structure having a function of correcting chromatic aberration on the circular non-film portion of the objective lens OBL in place of providing a diffractive structure on the first collimator APLCL or on the second collimator DPLCL, as a variation.

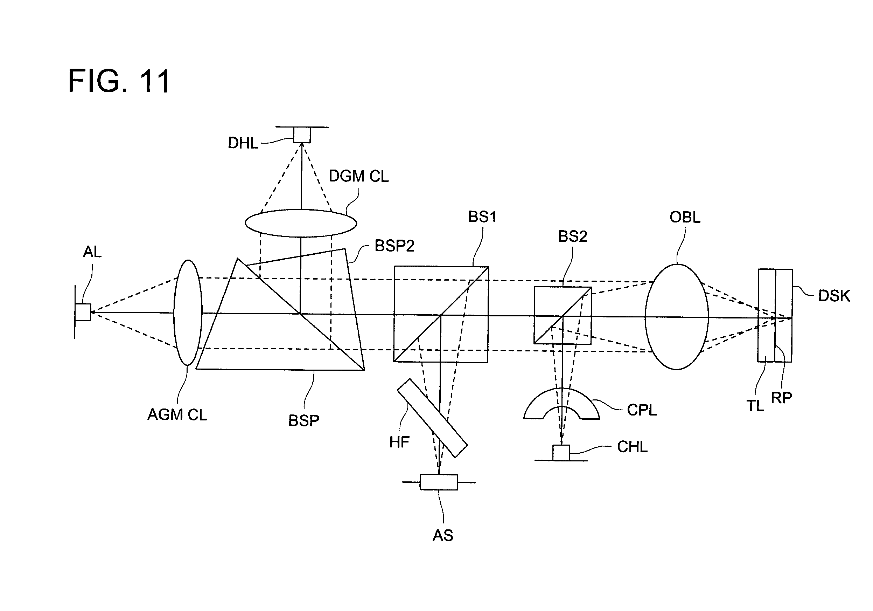

Fig. 11 is a schematic structure diagram of an optical information recording and reproducing device or an optical pickup apparatus relating to the tenth embodiment which can conduct recording and/or reproducing of information for all of a high density DVD (which is also called a first optical disc), a conventional DVD (which is also called a second optical disc) and a conventional CD (which is also called a third optical disc). Incidentally, a difference between the present embodiment and the embodiment shown in Fig. 10 is that the second beam shaping prism BSP2 that is exclusive for a light flux emitted from the second light source is provided in place of prism P so that beam shaping may be conducted also on a light flux with wavelength λ2 (see Item 82). With respect to the points other than that are the same as those in the embodiment (including variations) in Fig. 3 or Fig. 8, and an explanation will be omitted accordingly.

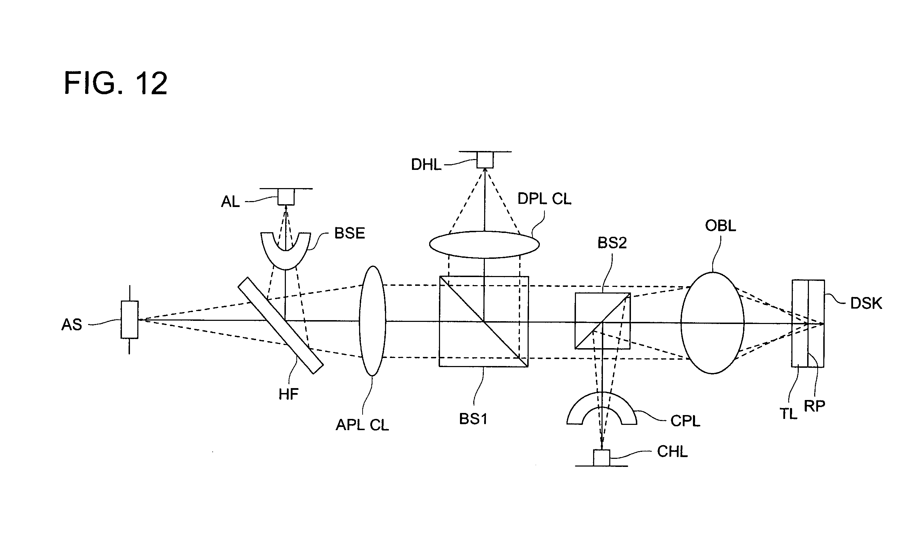

Fig. 12 is a schematic structure diagram of an optical information recording and reproducing device or an optical pickup apparatus relating to the eleventh embodiment which can conduct recording and/or reproducing of information for all of a high density DVD (which is also called a first optical disc), a conventional DVD (which is also called a second optical disc) and a conventional CD (which is also called a third optical disc).

In Fig. 12, a light flux emitted from the first semiconductor laser AL (wavelength λ1 = 380 nm - 450 nm) representing the first light source is beam-shaped by the first beam shaper BSE, then, is reflected on 1/4 wavelength plate HF and is transformed into a parallel light flux by the first collimator APLCL made by plastic, and after that, it passes through the first beam splitter BS1 and the second beam splitter BS2 to enter objective lens OBL representing a light-converging optical element to be converged on information recording surface RP through protective layer TL (thickness t1 is 0.5 - 0.7 mm and preferably is 0.6 mm) of the first optical disc DSK.

The light flux modulated by information pits and reflected on the information recording surface RP passes again through objective lens OBL, and is converged by the second beam splitter BS2, the first beam splitter BS1 and the first collimator APLCL to pass through 1/4 wavelength plate HF to enter photodetector AS, thus, the output signals therefrom are used to obtain reading signals for information information-recorded on the first optical disc DSK.

Further, a change in an amount of light caused by changes in forms and positions of a spot on the photodetector AS is detected for detection of focusing and a track. Then, the objective lens OBL is moved so that a two-dimensional actuator (not shown) may make a light flux emitted from the first semiconductor laser AL to form an image on the recording surface RP of the first optical disc DSK, based on the aforementioned detection, and the objective lens OBL is moved so that a light flux emitted from the semiconductor laser AL may form an image on a prescribed track.

On the other hand, a light flux emitted from the second semiconductor laser DHL (wavelength λ2 = 600 nm - 700 nm) representing the second light source and also representing hololaser is transformed into a parallel light flux by the second collimator DPLCL made of plastic, then, is reflected on the first beam splitter BS1, and passes through the second beam splitter BS2 to enter objective lens OBL representing a light-converging optical element to be converged on information recording surface RP through protective layer TL (thickness t2 is 0.5 - 0.7 mm and preferably is 0.6 mm) of the second optical disc DSK.

The light flux modulated by information pits and reflected on the information recording surface RP is transmitted again through objective lens OBL, then, passes through the second beam splitter BS2 and reflected on the first beam splitter BS1 to pass through the second collimator DPLCL and enter a photodetector (not shown) in the second semiconductor laser DHL, thus, the output signals therefrom are used to obtain reading signals for information information-recorded on the second optical disc DSK.

Further, a change in an amount of light caused by changes in forms and positions of a spot on the photodetector is detected for detection of focusing and a track. Then, the objective lens OBL is moved so that a two-dimensional actuator (not shown) may make a light flux emitted from the second semiconductor laser DHL to form an image on the recording surface RP of the second optical disc DSK, based on the aforementioned detection, and the objective lens OBL is moved so that a light flux emitted from the semiconductor laser DHL may form an image on a prescribed track.

Furthermore, a light flux emitted from the third semiconductor laser CHL (wavelength λ3 = 700 nm - 800 nm) representing the third light source and also representing hololaser passes through coupling lens CPL, then, reflected by the second beam splitter BS2 to enter objective lens 16 representing a light-converging optical element under the condition of divergence constraint, by which the light flux is converged on information recording surface RP through protective layer TL (thickness t3 is 1.1 - 1.3 mm and preferably is 1.2 mm) of the third optical disc DSK.

The light flux modulated by information pits and reflected on the information recording surface RP is transmitted again through objective lens OBL, and then, it enters the second beam splitter BS2 to be reflected thereon, and is converged by coupling lens CPL to enter photodetector (not shown) in the third semiconductor laser CHL, thus, the output signals therefrom are used to obtain reading signals for information information-recorded on the third optical disc DSK.

Further, a change in an amount of light caused by changes in forms and positions of a spot on the photodetector is detected for detection of focusing and a track. Then, the objective lens OBL is moved so that a two-dimensional actuator (not shown) may make a light flux emitted from the third semiconductor laser CHL to form an image on the recording surface RP of the third optical disc DSK, based on the aforementioned detection, and the objective lens OBL is moved so that a light flux emitted from the semiconductor laser CHL may form an image on a prescribed track.

In the present embodiment, it is possible to use coupling lens CPL as an opening regulating element by providing on an optical surface of coupling lens CPL a light-shielding film having a circular non-film portion (a circular region where a film whose center is on an optical axis is not formed) corresponding to the numerical aperture that makes it possible to conduct recording and/or reproducing of information properly on information recording surface RP of the third optical disc DSK, and thereby by making a light flux with wavelength λ3 to pass through only the circular non-film portion.

As a variation, however, it is also possible to provide, as an opening regulating element, a dichroic filter that has a circular non-film portion corresponding to the numerical aperture capable of conducting recording and/or reproducing of information properly on information recording surface RP of the third optical disk DSK and is equipped with a dichroic coat between, for example, the second beam splitter BS2 and objective lens OBL, in place of providing a light-shielding film on coupling lens CPL. In this case, the dichroic coat functions to prevent passage of only the light flux with wavelength λ3 emitted from the third semiconductor laser CHL.

Further, as another variation, it is also possible to provide, as an opening regulating element, a dichroic prism on which a dichroic coat having a circular non-film portion corresponding to the numerical aperture capable of conducting recording and/or reproducing of information properly on information recording surface RP of the third optical disk DSK, in an optical path for light with wavelength λ3, for example, in place of providing a light-shielding film on coupling lens CPL. In this case, the dichroic coat functions to prevent passage of only the light flux with wavelength λ3 emitted from the third semiconductor laser CHL.

Further, as still another variation, it is also possible to form a dichroic coat having a circular non-film portion corresponding to the numerical aperture capable of conducting recording and/or reproducing of information properly on information recording surface RP of the third optical disk DSK, on an optical surface of objective lens OBL, for example, in place of providing a light-shielding film on coupling lens CPL. In this case, a region having the dichroic coat functions as a second region because it prevents passage of only the light flux with wavelength λ3 emitted from the third semiconductor laser CHL, while, the circular non-film portion functions as the first region. In this case, a diffractive structure is not provided on the region where the dichroic coat is provided.

In the present embodiment, a diffractive structure is provided on the circular non-film portion of objective lens OBL through which the light flux with wavelength λ1 and the light flux with wavelength λ2 pass to correct chromatic aberration for the light flux with wavelength λ1 emitted from the first semiconductor laser AL, and a diffractive structure is provided on the second collimator DPLCL through which the light flux with wavelength λ2 emitted from the second semiconductor laser DHL only passes, to correct chromatic aberration for the aforementioned light flux (see Item 62).

Further, in the present embodiment, beam shaping is conducted for the light flux emitted from the first semiconductor laser AL by arranging first beam shaper BSE between the first collimator APLCL and the first semiconductor laser AL on the optical path through which a light flux with wavelength λ1 passes. As a variation of the foregoing, it is also possible to provide a diffractive structure on the first beam shaper BSE or collimator APLCL through which a light flux with wavelength λ1 only passes to correct chromatic aberration for the light flux with wavelength λ1.

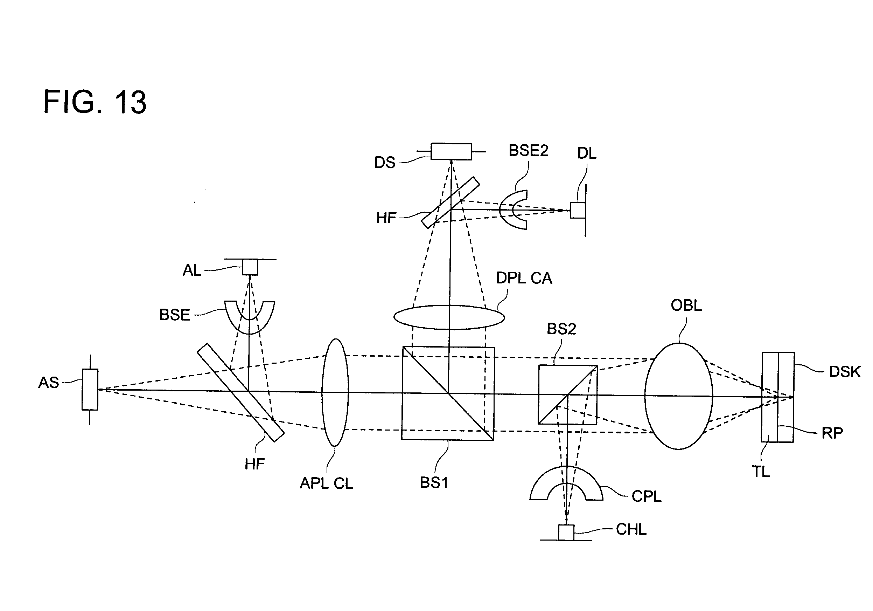

Fig. 13 is a schematic structure diagram of an optical information recording and reproducing device or an optical pickup apparatus relating to the tenth embodiment which can conduct recording and/or reproducing of information for all of a high density DVD (which is also called a first optical disc), a conventional DVD (which is also called a second optical disc) and a conventional CD (which is also called a third optical disc). Incidentally, a difference between the present embodiment and the embodiment shown in Fig. 12 is that a light flux emitted not from the second semiconductor laser of hololaser but from the second semiconductor laser is beam-shaped by the second beam shaper BSE2 and is reflected by 1/4 wavelength plate HF to enter the second collimator DPLCA. The reflected light from the second disc DSK passes through 1/4 wavelength plate HF through the second collimator DPLCA and is received by photodetector DS. Further, a diffractive structure is provided on the second beam shaper BSE2 to correct chromatic aberration for the light flux with wavelength λ2. With respect to the points other than the foregoing are the same as those in the embodiment (including variations) in Fig. 12, and an explanation will be omitted accordingly.

Preferable examples for the aforementioned embodiments will be explained as follows.

Both surfaces of an objective lens are represented by an aspheric surface shown in "Numeral 1" wherein Z represents an axis in the direction of an optical axis, h represents a height from the optical axis, r represents a paraxial radius of curvature, κ represents the constant of the cone and $A_{2i}$ represents the coefficient of aspheric surface.

(Numeral 1)

$$Z = \frac{(h^2/r)}{1+\sqrt{1-(1+\kappa)(h/r)^2}} + \sum_{i=1}^{9} A_{2i}h^{2i}$$

Further, a diffractive structure is formed solidly on the surface of the aspheric surface closer to the light source on the objective lens. This diffractive structure is expressed by optical path difference function Φ for blazed wavelength λB in "Numeral 2". Further, controlling of the spherical aberration can be carried out by the coefficient other than the second order coefficient, for example, by the coefficient of the fourth order or of the sixth order. "Controlling" in this case means that the spherical aberration on the refraction portion is made to be one having opposite characteristics by the diffracting portion so that the spherical aberration may be corrected on the whole, and that the wavelength dependency of the diffracting portion is utilized so that the spherical aberration may be corrected or a flare may be generated by the incident wavelength. In this case, the spherical aberration in the case of temperature changes can be considered to be the total of a temperature change of the spherical aberration of the diffracting portion and a spherical aberration change of the diffracting portion. Incidentally, let it be assumed that blazed wavelength $\lambda_B$ is equal to 1 mm in the following examples.

(Numeral 2)

$$\Phi(H) = (\sum_{i=1}^{5} C_{2i}H^{2i}) \times \lambda \times n(mm)$$

(n: Diffraction order number)

(Example 1)

Table 1 shows lens data of an optical element (objective lens) that is an example that is right fit for the aforementioned embodiment. A diffractive structure is provided on the region (which is called a common region) through which light fluxes emitted respectively from the first, second and third semiconductor lasers pass, which is clear from Table 1. This diffractive structure has optical characteristics which make the spherical aberration of the light flux passing through the diffractive structure to be under when the light source wavelength is changed to be longer. The present example corresponds to the optical element described in Items 6 and 7. Incidentally, let it be assumed hereafter (including lens data on the Table) that an exponent of 10 (for example, $2.5 \times 10^{-3}$) is expressed by the use of E (for example, 2.5 x E - 3).

Table 1

| Example 1  Lens Data | | | |
|---|---|---|---|
| Focal length of objective lens | $f_1$=2.4mm | $f_2$=2.4mm | $f_2$=2.49mm |
| Numerical aperture on image side | NA1:0.65 | NA2:0.65 | NA2:0.45 |
| Diffraction order number | n1:2 | n2:1 | n3:1 |
| Magnification | m1:0 | m2:-1/13.1 | m3:-1/13.0 |

| $i^{th}$ surface | ri | di(407nm) | ni(407nm) | di(655nm) | ni(655nm) | di(785nm) | ni(785nm) |
|---|---|---|---|---|---|---|---|
| 0 | | 13.45 | | 12.75 | | 34.74 | |
| 1(Aperture diameter) | $\infty$ | 0.1 (Φ3.120mm) | | 0.1 (Φ3.452mm) | | 0.1 (Φ2.392mm) | |
| 2 | 1.54056 | 1.70 | 1.524609 | 1.70 | 1.506732 | 1.70 | 1.503453 |
| 3 | -5.05826 | 1.08 | 1.0 | 1.35 | 1.0 | 1.35 | 1.0 |
| 4 | $\infty$ | 0.60 | 1.61869 | 0.60 | 1.57752 | 1.20 | 1.57063 |
| 5 | $\infty$ | | | | | | |

\* The symbol "di" represents a displacement from the $i^{th}$ surface to the $(i + 1)^{th}$ surface.

Aspheric surface data

| | Second surface | | Third surface |
|---|---|---|---|
| Aspheric surface coefficient | κ   -7.7790 x E-1<br>A4  +5.1727 x E-3<br>A6  +1.1101 x E-3<br>A8  -6.4972 x E-4<br>A10 -5.9817 x E-4<br>A12 +3.3629 x E-4<br>A14 -6.2531 x E-5 | Aspheric surface coefficient | κ   -6.6494 x E+1<br>A4  +4.7077 x E-3<br>A6  +1.8991 x E-3<br>A8  -4.8520 x E-3<br>A10 +1.6255 x E-3<br>A12 -2.4962 x E-4<br>A14 +1.1626 x E-5 |
| Optical path difference function (blazed wavelength 1 mm) | C2  -8.1974 x E-0<br>C4  -5.7385 x E-0<br>C6  +1.8525 x E-0<br>C8  -1.7519 x E-0<br>C10 +3.7926 x E-1 | | |

EP 1 411 506 A2

Specifications in the present example are as follows.

(1) Light source wavelength λ1 of the first semiconductor laser : 407 nm
(2) Order number n1 exhibiting maximum diffraction efficiency when a light flux from first semiconductor laser passes through diffractive structure : Second order
(3) Magnification m1 of objective lens for light flux from first semiconductor laser : 0
(4) Light source wavelength λ2 of second semiconductor laser : 655 nm
(5) Order number n2 exhibiting maximum diffraction efficiency when a light flux from second semiconductor laser passes through diffractive structure : First order
(6) Magnification m2 of objective lens for light flux from third semiconductor laser : -1/13.1
(7) Light source wavelength λ3 of third semiconductor laser : 785 nm
(8) Order number n3 exhibiting maximum diffraction efficiency when a light flux from third semiconductor laser passes through diffractive structure : First order
(9) Magnification m3 of objective lens for light flux from third semiconductor laser : -1/13.0

(Example 2)

Table 2 shows lens data of an optical element (objective lens) that is an example that is right fit for the aforementioned embodiment. A diffractive structure is provided on the region (which is called a common region) through which light fluxes emitted respectively from the first, second and third semiconductor lasers pass, which is clear from Table 2. This diffractive structure has optical characteristics which make the spherical aberration of the light flux passing through the diffractive structure to be under when the light source wavelength is changed to be longer. The present example corresponds to the optical element described in Item 11.

Table 2-1

| Example 2   Lens Data | | | |
|---|---|---|---|
| Focal length of objective lens | $f_1$=2.4mm | $f_2$=2.46mm | $f_2$=2.49mm |
| Numerical aperture on image side | NA1:0.65 | NA2:0.65 | NA3:0.45 |
| Diffraction order number | n1:6 | n2:4 | n3:3 |
| Magnification | m1:0 | m2:0 | m3:-1/12.7 |

| $i^{th}$ surface | ri | di(407nm) | ni(407nm) | di(655nm) | ni(655nm) | di(785nm) | ni(785nm) |
|---|---|---|---|---|---|---|---|
| 0 | | ∞ | | 12.75 | | 33.74 | |
| 1(Aperture diameter) | ∞ | 0.1 ($\Phi$3.120mm) | | 0.1 ($\Phi$3.192mm) | | 0.1 ($\Phi$2.401mm) | |
| 2 | 1.59131 | 1.60000 | 1.524609 | 1.60000 | 1.506732 | 1.60000 | 1.503453 |
| 2' | 2.16692 | 0.15126 | 1.524609 | 0.15126 | 1.506732 | 0.15126 | 1.503453 |
| 3 | -5.85891 | 1.12 | 1.0 | 1.16 | 1.0 | 1.01 | 1.0 |
| 3' | -5.51220 | 0.00000 | 1.0 | 0.00000 | 1.0 | 0.00000 | 1.0 |
| 4 | ∞ | 0.6 | 1.61869 | 0.6 | 1.57752 | 1.2 | 1.57063 |
| 5 | ∞ | | | | | | |

* The symbol "di" represents a displacement from the $i^{th}$ surface to the $(i + 1)^{th}$ surface.

* The symbols "d2'" and "d3'" represent respectively a displacement from the second surface to $(2')^{th}$ surface and a displacement from the third surface to $(3')^{th}$ surface

EP 1 411 506 A2

Table 2-1

| Aspheric surface data | |
|---|---|
| Second surface (0<h<1.56 mm : HD-DVD/DVD common region) | |
| Aspheric surface coefficient | $\kappa$ -7.4653 x E-1 |
| | A4 +8.3080 x E-3 |
| | A6 -8.7702 x E-4 |
| | A8 +1.3463 x E-3 |
| | A10 -7.9116 x E-4 |
| | A12 +2.9845 x E-4 |
| | A14 -6.6527 x E-5 |
| Optical path function (blazed wavelength 1 mm) | C2 -1.2851 x E-1 |
| | C4 -1.8026 x E-0 |
| | C6 -1.1807 x E-2 |
| | C8 +4.8953 x E-1 |
| | C10 +4.8953 x E-3 |
| (2')<sup>th</sup> surface (1.56 mm<h : DVD exclusive region) | |
| Aspheric surface coefficient | $\kappa$ -7.4653 x E-1 |
| | A4 +8.3080 x E-3 |
| | A6 -8.7702 x E-4 |
| | A8 +1.3463 x E-3 |
| | A10 -7.9116 x E-4 |
| | A12 +2.9845 x E-4 |
| | A14 -6.6527 x E-4 |
| Optical path difference function (blazed wavelength 1 mm) | C2 -4.0492 x E+1 |
| | C4 +1.2757 x E-0 |
| | C6 +2.8435 x E-0 |
| | C8 +1.0392 x E-0 |
| | C10 -9.0342 x E-1 |
| Third surface (0<h<1.287 mm) | |
| Aspheric surface coefficient | $\kappa$ -9.6287 x E+1 |
| | A4 -3.4537 x E-2 |
| | A6 +1.2630 x E-2 |
| | A8 -9.0327 x E-3 |
| | A10 +2.2022 x E-3 |
| | A12 -1.0621 x E-4 |
| | A14 -3.1979 x E-5 |

Table 2-1   (continued)

| Aspheric surface data | |
|---|---|
| Second surface (0<h<1.56 mm : HD-DVD/DVD common region) | |
| (3')$^{th}$ surface (1.287 mm<h) | |
| Aspheric surface coefficient | $\kappa$ -1.5903 x E+2 |
| | A4 +8.4430 x E-4 |
| | A6 -1.2839 x E-2 |
| | A8 -9.6961 x E-3 |
| | A10 +1.9433 x E-3 |
| | A12 -8.6437 x E-5 |
| | A14 -1.8294 x E-5 |

Specifications in the present example are as follows.

(1) Light source wavelength $\lambda$1 of the first semiconductor laser : 407 nm
(2) Order number n1 exhibiting maximum diffraction efficiency when a light flux from first semiconductor laser passes through diffractive structure : Sixth order
(3) Magnification m1 of objective lens for light flux from first semiconductor laser : 0
(4) Light source wavelength $\lambda$2 of second semiconductor laser : 655 nm
(5) Order number n2 exhibiting maximum diffraction efficiency when a light flux from second semiconductor laser passes through diffractive structure : Fourth order
(6) Magnification m2 of objective lens for light flux from second semiconductor laser : 0
(7) Light source wavelength $\lambda$3 of third semiconductor laser : 785 nm
(8) Order number n3 exhibiting maximum diffraction efficiency when a light flux from third semiconductor laser passes through diffractive structure : Third order
(9) Magnification m3 of objective lens for light flux from third semiconductor laser : -1/12.7

(Example 3)

Table 3 shows lens data of an optical element (objective lens) that is an example that is right fit for the aforementioned embodiment. A diffractive structure is provided on the region (which is called a common region) through which light fluxes emitted respectively from the first, second and third semiconductor lasers pass, which is clear from Table 3. This diffractive structure has optical characteristics which make the spherical aberration of the light flux passing through the diffractive structure to be under when the light source wavelength is changed to be longer. The present example corresponds to the optical element described in Item 11.

Table 3

| Example 3  Lens Data | | | |
|---|---|---|---|
| Focal length of objective lens | $f_1$=2.4mm | $f_2$=2.4mm | $f_2$=2.5mm |
| Numerical aperture on image side | NA1:0.65 | NA2:0.65 | NA2:0.45 |
| Diffraction order number | n1:6 | n2:4 | n3:3 |
| Magnification | m1:0 | m2:0 | m3:-1/13.2 |

| $i^{th}$ surface | $r_i$ | di (407nm) | ni (407nm) | di (655nm) | ni (655nm) | di (785nm) | ni (785nm) |
|---|---|---|---|---|---|---|---|
| 0 | | 14.15 | | 12.65 | | 35.30 | |
| 1 (Aperture diameter) | ∞ | 0.1 (Φ3.120mm) | | 0.1 (Φ3.123mm) | | 0.1 (Φ2.405mm) | |
| 2 | 1.94029 | 1.60 | 1.524609 | 1.60 | 1.506732 | 1.60 | 1.503453 |
| 3 | -19.05844 | 1.02 | 1.0 | 1.00 | 1.0 | 0.90 | 1.0 |
| 4 | ∞ | 0.60 | 1.61869 | 0.60 | 1.57752 | 1.20 | 1.57063 |
| 5 | ∞ | | | | | | |

* The symbol "di" represents a displacement from the $i^{th}$ surface to the $(i + 1)^{th}$ surface.

Aspheric surface data

| Second surface | | Third surface | |
|---|---|---|---|
| Aspheric surface coefficient | κ   -7.6390 x E-1<br>A4  +5.7888 x E-3<br>A6  +5.9520 x E-4<br>A8  +9.0951 x E-4<br>A10 -9.9238 x E-4<br>A12 +4.0468 x E-4<br>A14 -7.5725 x E-5 | Aspheric surface coefficient | κ   -4.5835 x E+2<br>A4  +1.8084 x E-2<br>A6  -4.3442 x E-3<br>A8  -4.5714 x E-3<br>A10 +4.1244 x E-3<br>A12 -2.4595 x E-3<br>A14 +5.7937 x E-4 |
| Optical path difference function (blazed wavelength 1 mm) | C2  -2.6687 x E+1<br>C4  -1.6322 x E-0<br>C6  +5.5099 x E-2<br>C8  -1.0644 x E-0<br>C10 +1.3015 x E-2 | | |

EP 1 411 506 A2

Specifications in the present example are as follows.

(1) Light source wavelength λ1 of the first semiconductor laser : 407 nm
(2) Order number n1 exhibiting maximum diffraction efficiency when a light flux from first semiconductor laser passes through diffractive structure : Sixth order
(3) Magnification m1 of objective lens for light flux from first semiconductor laser : 0
(4) Light source wavelength λ2 of second semiconductor laser : 655 nm
(5) Order number n2 exhibiting maximum diffraction efficiency when a light flux from second semiconductor laser passes through diffractive structure : Fourth order
(6) Magnification m2 of objective lens for light flux from second semiconductor laser : 0
(7) Light source wavelength λ3 of third semiconductor laser : 785 nm
(8) Order number n3 exhibiting maximum diffraction efficiency when a light flux from third semiconductor laser passes through diffractive structure : Third order
(9) Magnification m3 of objective lens for light flux from third semiconductor laser : -1/13.2

(Example 4)

Table 4 shows lens data of an optical element (objective lens) that is an example that is right fit for the aforementioned embodiment. A diffractive structure is provided on the region (which is called a common region) through which light fluxes emitted respectively from the first, second and third semiconductor lasers pass, which is clear from Table 4. This diffractive structure has optical characteristics which make the spherical aberration of the light flux passing through the diffractive structure to be under when the light source wavelength is changed to be longer. The present example corresponds to the optical element described in Item 11.

Table 4

| Example 4 Lens Data | | | |
|---|---|---|---|
| Focal length of objective lens | f₁=2.4mm | f₂=2.45mm | f₂=2.50mm |
| Numerical aperture on image side | NA1:0.65 | NA2:0.65 | NA2:0.45 |
| Diffraction order number | n1:8 | n2:5 | n3:4 |
| Magnification | m1:0 | m2:-1/333 | m3:-1/13.4 |

| ith surface | ri | di (407nm) | ni 407nm | di (655nm) | ni (655nm) | di (785nm) | ni (785nm) |
|---|---|---|---|---|---|---|---|
| 0 | ∞ | 14.15 | | 827.00 | | 36.16 | |
| 1 (Aperture diameter) | | 0.1 (Φ3.120mm) | | 0.1 (Φ3.198mm) | | 0.1 (Φ2.403mm) | |
| 2 | 1.92291 | 1.60 | 1.524609 | 1.60 | 1.506732 | 1.60 | 1.503453 |
| 3 | -19.08099 | 1.02 | 1.0 | 1.06 | 1.0 | 0.89 | 1.0 |
| 4 | ∞ | 0.60 | 1.61869 | 0.60 | 1.57752 | 1.20 | 1.57063 |
| 5 | ∞ | | | | | | |

\* The symbol "di" represents a displacement from the $i^{th}$ surface to the $(i + 1)^{th}$ surface.

Aspheric surface data

| Second surface | | |
|---|---|---|
| Aspheric surface coefficient | κ | -7.9792 × E-1 |
| | A4 | +4.9330 × E-3 |
| | A6 | +7.0747 × E-4 |
| | A8 | +9.4490 × E-4 |
| | A10 | -1.0691 × E-3 |
| | A12 | +4.1435 × E-4 |
| | A14 | -7.3960 × E-5 |
| Optical path difference function (blazed wavelength 1 mm) | C2 | -1.9643 × E+1 |
| | C4 | -1.5085 × E-0 |
| | C6 | +1.0855 × E-1 |
| | C8 | -1.0371 × E-1 |
| | C10 | +1.3735 × E-2 |

| Third surface | | |
|---|---|---|
| Aspheric surface coefficient | κ | -5.2563 × E+2 |
| | A4 | +1.7853 × E-2 |
| | A6 | -4.7662 × E-3 |
| | A8 | -4.9002 × E-3 |
| | A10 | -4.0691 × E-3 |
| | A12 | -1.9875 × E-3 |
| | A14 | +3.9475 × E-4 |

Specifications in the present example are as follows.

(1) Light source wavelength $\lambda 1$ of the first semiconductor laser : 407 nm

(2) Order number n1 exhibiting maximum diffraction efficiency when a light flux from first semiconductor laser passes through diffractive structure : Eighth order

(3) Magnification m1 of objective lens for light flux from first semiconductor laser : 0

(4) Light source wavelength $\lambda 2$ of second semiconductor laser : 655 nm

(5) Order number n2 exhibiting maximum diffraction efficiency when a light flux from second semiconductor laser passes through diffractive structure : Fifth order

(6) Magnification m2 of objective lens for light flux from second semiconductor laser : -1/333

(7) Light source wavelength $\lambda 3$ of third semiconductor laser : 785 nm

(8) Order number n3 exhibiting maximum diffraction efficiency when a light flux from third semiconductor laser passes through diffractive structure : Fourth order

(9) Magnification m3 of objective lens for light flux from third semiconductor laser : -1/13.4

(Example 5)

Table 5 shows lens data of an optical element (objective lens) that is an example that is right fit for the aforementioned embodiment. A first diffractive structure is provided on the region (which is called a common region for HD-DVD, DVD and CD) through which light fluxes emitted respectively from the first, second and third semiconductor lasers pass, and a second diffractive structure is provided on the region (which is called a common region for HD-DVD and DVD) through which light fluxes emitted respectively from the first and second semiconductor lasers pass, in the objective lens, which is clear from Table 5. The present example corresponds to the optical element for the optical pickup apparatus described in Item 32.

Table 5-1

| Example 5 | | | |
|---|---|---|---|
| Focal length of objective lens | $f_1$=3mm | $f_2$=3.08mm | $f_3$=3.09mm |
| Numerical aperture on image side | NA1:0.65 | NA2:0.65 | NA3:0.5 |
| Order number of diffracted light by first diffracting structure | n1:2 | n2:1 | n3:1 |
| Order number of diffracted light by second diffracting structure | n1':3 | n2':2 | |
| Magnification | m1:0 | m2:0 | m3:-1/14.3 |

| $i^{th}$ surface | ri | di(407nm) | ni(407nm) | di(655nm) | ni(655nm) | di(785nm) | ni(785nm) |
|---|---|---|---|---|---|---|---|
| 0 | | ∞ | | ∞ | | 47.11 | |
| 1(Aperture diameter) | ∞ | 0.1 (Φ4.0mm) | | 0.1 (Φ4.0mm) | | 0.1 (Φ2.401mm) | |
| 2 | 1.92929 | 2.00000 | 1.54277 | 2.00000 | 1.52915 | 2.00000 | 1.52541 |
| 2' | 1.84317 | -0.00703 | 1.54277 | -0.00703 | 1.52915 | -0.00703 | 1.52541 |
| 3 | -6.96399 | 1.42 | 1.0 | 1.48 | 1.0 | 1.33 | 1.0 |
| 4 | ∞ | 0.6 | 1.61869 | 0.6 | 1.57752 | 1.2 | 1.57063 |
| 5 | ∞ | | | | | | |

* The symbol "di" represents a displacement from the $i^{th}$ surface to the $(i + 1)^{th}$ surface.

* The symbol "d2" represents a displacement from the second surface to the $(2')^{th}$ surface.

EP 1 411 506 A2

| Aspheric surface data | |
|---|---|
| Second surface (0<h<1.68 mm : HD-DVD/DVD/CD common region) | |
| Aspheric surface coefficient | $\kappa$ -4.5379 x E-1 |
| | A4 +2.0525 x E-3 |
| | A6 -1.1756 x E-3 |
| | A8 +2.5759 x E-4 |
| | A10 +2.3562 x E-6 |
| | A12 -7.9031 x E-6 |
| Optical path difference function (blazed wavelength 1 mm) | C2 -8.4960 x E-1 |
| | C4 +3.5177 x E-1 |
| | C6 -1.0464 x E-1 |
| | C8 +4.6954 x E-2 |
| | C10 -5.6408 x E-3 |
| (2')th surface (1.68 mm<h : HD-DVD/DVD common region) | |
| Aspheric surface coefficient | $\kappa$ -5.7918 x E-1 |
| | A4 +9.6782 x E-4 |
| | A6 -1.2926 x E-3 |
| | A8 +7.0939 x E-5 |
| | A10 +9.4340 x E-5 |
| | A12 -1.8905 x E-5 |
| Optical path difference function (blazed wavelength 1 mm) | C2 +2.7786 x E-1 |
| | C4 -5.6866 x E-2 |
| | C6 -1.6304 x E-2 |
| | C8 +1.3984 x E-3 |
| | C10 -3.5235 x E-4 |
| Third surface | |
| Aspheric surface coefficient | $\kappa$ -1.0427 x E+2 |
| | A4 -4.8545 x E-3 |
| | A6 +5.8441 x E-3 |
| | A8 -2.1908 x E-3 |
| | A10 +3.9724 x E-4 |
| | A12 -3.9184 x E-5 |
| | A14 +1.7473 x E-6 |

Specifications in the present example are as follows.

(1) Light source wavelength $\lambda$1 of the first semiconductor laser : 407 nm
(2) Order number n1 exhibiting maximum diffraction efficiency when a light flux from first semiconductor laser passes through the first diffractive structure : Second order
(3) Magnification m1 of objective lens for light flux from first semiconductor laser : 0
(4) Light source wavelength $\lambda$2 of second semiconductor laser : 655 nm
(5) Order number n2 exhibiting maximum diffraction efficiency when a light flux from second semiconductor laser passes through the first diffractive structure : First order

(6) Magnification m2 of objective lens for light flux from second semiconductor laser : 0

(7) Light source wavelength λ3 of third semiconductor laser : 785 nm

(8) Order number n3 exhibiting maximum diffraction efficiency when a light flux from third semiconductor laser passes through diffractive structure : First order

(9) Magnification m3 of objective lens for light flux from third semiconductor laser : -1/14.3

A table of diffraction efficiency of the objective lens in the present example is shown in Table 6. Table 6 shows the diffraction efficiency which is shown when a light flux with a wavelength used for each optical information recording medium shown in Table 6 passes through the first diffractive structure that is designed so that the secondary diffracted light may come to 100% when a light flux with wavelength 420 nm passes through a common region for high density DVD, DVD and CD, and the diffraction efficiency which is shown when a light flux with a wavelength used for each optical information recording medium shown in Table 6 passes through the second diffractive structure that is designed so that the secondary diffracted light may come to 100% when a light flux with wavelength 420 nm passes through a common region for high density DVD and DVD.

Table 6

| Diffraction order number and efficiency having the maximum diffraction efficiency in each region | | | | | | |
|---|---|---|---|---|---|---|
| | Order number | | | Efficiency (x 100%) | | |
| | High density DVD | DVD | CD | High density DVD | DVD | CD |
| Common region for high density DVD, DVD and CD | 2 | 1 | 1 | 0.98 | 0.81 | 1.00 |
| Common region for high density DVD and DVD | 3 | 2 | 2 | 0.97 | 0.95 | 0.50 |

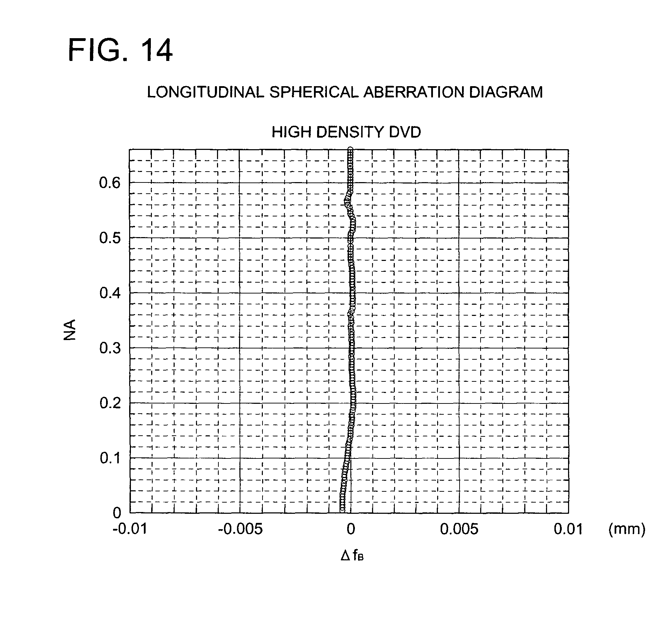

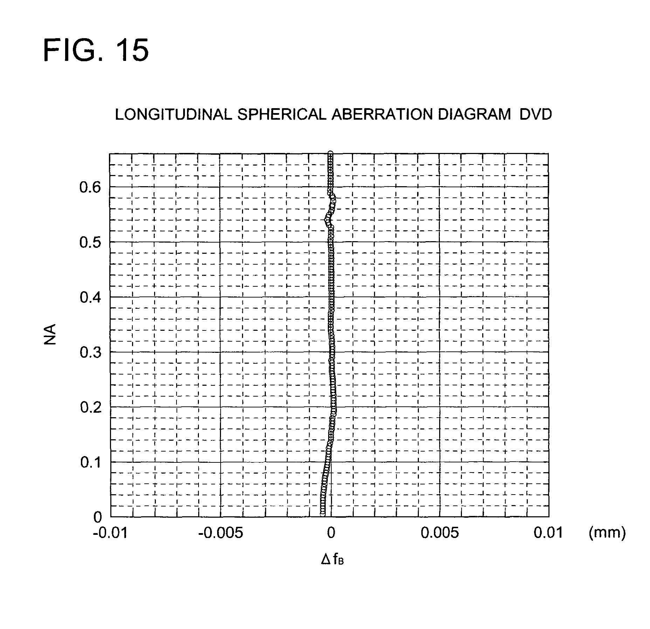

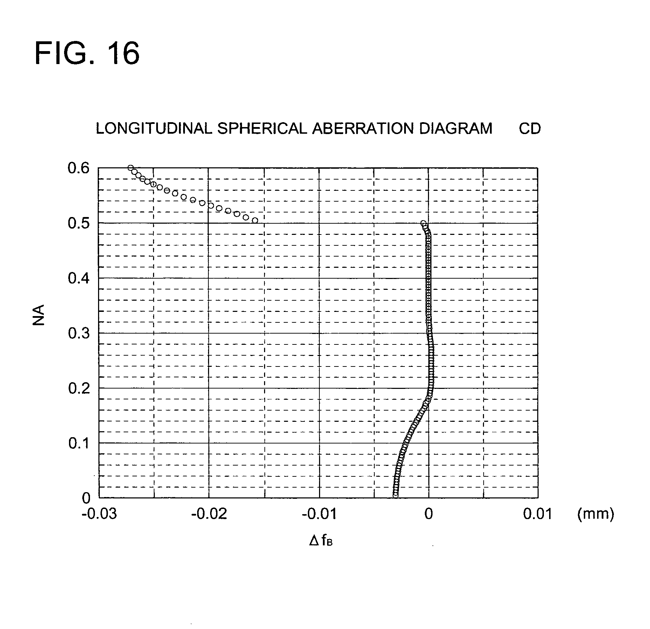

Figs. 14 - 16 represent vertical diagrams of spherical aberration concerning the diffracted light with the order number that achieves the maximum diffraction efficiency in the objective lens of the present example.

Table 7 shows lens data of an optical element (objective lens) that is an example that is right fit for embodiments corresponding to Items 20 and 55.

Table 7-1

| Lens date | | | |
|---|---|---|---|
| Focal length of objective lens | $f_1$=2.4mm | $f_2$=2.4mm | $f_2$=2.5mm |
| Numerical aperture on image side | NA1:0.65 | NA2:0.65 | NA2:0.45 |
| S2 surface diffraction order | n1A:6 | n1D:4 | n1C:3 |
| S2' surface diffraction order | n1A:3 | n2D:2 | |
| Magnification | m1:0 | m2:0 | m3:-1/13.2 |

| $i^{th}$ surface | ri | di(407nm) | ni(407nm) | di(655nm) | ni(655nm) | di(785nm) | ni(785nm) |
|---|---|---|---|---|---|---|---|
| 0 | | ∞ | | ∞ | | 35.30 | |
| 1(Aperture diameter) | ∞ | 0.1 (Φ3.120mm) | | 0.1 (Φ3.123mm) | | 0.1 (Φ2.405mm) | |
| 2 | 1.94029 | 1.60 | 1.524609 | 1.60 | 1.506732 | 1.60 | 1.503453 |
| 2' | 1.94029 | 0.00 | 1.524609 | 0.00 | 1.506732 | 0.00 | 1.503453 |
| 3 | -19.05844 | 1.02 | 1.0 | 1.00 | 1.0 | 0.90 | 1.0 |
| 4 | ∞ | 0.60 | 1.61869 | 0.60 | 1.57752 | 1.20 | 1.57063 |
| 5 | ∞ | | | | | | |

* The symbol "di" represents a displacement from the $i^{th}$ surface to the $(i + 1)^{th}$ surface.

* The symbol "d2" represents a displacement from the second surface to the $(2')^{th}$ surface.

| Aspheric surface data | | | |
|---|---|---|---|
| Second surface | | | |
| Aspheric surface coefficient | κ -7.6390 x E-1 | | |
| | A1 +5.7888 x E-3 | P1 4.0 | |
| | A2 +5.9520 x E-4 | P2 6.0 | |
| | A3 +9.0951 x E-4 | P3 8.0 | |
| | A4 +9.9238 x E-4 | P4 10.0 | |
| | A5 +4.0468 x E-4 | P5 12.0 | |
| | A6 -7.5725 x E-5 | P6 14.0 | |
| Optical path difference function (blazed wavelength $\lambda_B$=1 mm) | C2 -2.6687 x E+1 | | |
| | C4 -1.6322 x E-0 | | |
| | C6 +5.5099 x E-2 | | |
| | C8 -1.0644 x E-0 | | |
| | C10 +1.3015 x E-2 | | |
| (2')$^{th}$ surface | | | |
| Aspheric surface coefficient | κ -7.6390 x E-1 | | |
| | A1 +5.7888 x E-3 | P1 4.0 | |
| | A2 +5.9520 x E-4 | P2 6.0 | |
| | A3 +9.0951 x E-4 | P3 8.0 | |
| | A4 -9.9238 x E-4 | P4 10.0 | |
| | A5 +4.0468 x E-4 | P5 12.0 | |
| | A6 -7.5725 x E-5 | P6 14.0 | |
| Optical path difference function (blazed wavelength $\lambda_B$=1 mm) | C2 -5.3374 x E+1 | | |
| | C4 -3.2644 x E-0 | | |
| | C6 +1.1020 x E-1 | | |
| | C8 -2.1288 x E-0 | | |
| | C10 +2.6030 x E-2 | | |
| Third surface | | | |
| Aspheric surface coefficient | κ -4.5835 x E+2 | | |
| | A1 +1.8084 x E-2 | P1 4.0 | |
| | A2 -4.3442 x E-3 | P2 6.0 | |
| | A3 -4.5714 x E-3 | P3 8.0 | |
| | A4 +4.1244 x E-3 | P4 10.0 | |
| | A5 -2.4595 x E-3 | P5 12.0 | |
| | A6 +5.7937 x E-4 | P6 14.0 | |

Specifications in the present example are as follows.

(1) Light source wavelength $\lambda$1 of the first semiconductor laser : 407 nm
(2) Order number n1 (N1A) exhibiting maximum diffraction efficiency when a light flux from first semiconductor laser passes through the first diffractive structure: Sixth order

(2') Order number n2A exhibiting maximum diffraction efficiency when a light flux from first semiconductor laser passes through the second diffractive structure: Third order

(3) Magnification m1 of objective lens for light flux from first semiconductor laser : 0

(4) Light source wavelength $\lambda2$ of second semiconductor laser : 655 nm

(5) Order number n2 (n1D) exhibiting maximum diffraction efficiency when a light flux from second semiconductor laser passes through the first diffractive structure: Fourth order (5') Order number n2D exhibiting maximum diffraction efficiency when a light flux from second semiconductor laser passes through the second diffractive structure: Second order

(6) Magnification m2 of objective lens for light flux from second semiconductor laser : 0

(7) Light source wavelength $\lambda3$ of third semiconductor laser : 785 nm

(8) Order number n3 (n1C) exhibiting maximum diffraction efficiency when a light flux from third semiconductor laser passes through the first diffractive structure: Third order

(9) Magnification m3 of objective lens for light flux from the third semiconductor laser : -1/13.2

The invention makes it possible to provide an optical element for use in an optical pickup apparatus capable of conducting recording and/or reproducing of information properly for all of high density DVD, conventional DVD and CD, while securing a sufficient amount of spot light, and the optical pickup apparatus.

## Claims

1. An optical element for use in an optical pickup apparatus which comprises a first light source having a wavelength $\lambda1$, a second light source having a wavelength $\lambda2$ ($\lambda1 < \lambda2$), a third light source having a wavelength $\lambda3$ ($1.6 \cdot \lambda1 \leq \lambda3 \leq 2.0 \cdot \lambda1$ and $\lambda2 < \lambda3$), and a light converging system including an optical element, wherein the light converging system converges a light flux from the first light source onto an information recording plane of a first optical information recording medium through a protective layer having a thickness t1 so that recording and/or reproducing information is conducted for the first optical information recording medium, converges a light flux from the second light source onto an information recording plane of a second optical information recording medium through a protective layer having a thickness t2 ($0.8 \cdot t1 \leq t2 \leq 1.2 \cdot t1$) so that recording and/or reproducing information is conducted for the second optical information recording medium, and converges a light flux from the third light source onto an information recording plane of a third optical information recording medium through a protective layer having a thickness t3 ($1.9 \cdot t1 \leq t3 \leq 2.1 \cdot t1$) so that recording and/or reproducing information is conducted for the third optical information recording medium, the optical element comprising:

   a first diffractive structure on at least one surface thereof,

   wherein when recording and/or reproducing is conducted for the first, second and third information recording mediums respectively, a light flux emitted from each of the first, second and third light sources passes in common through the first diffractive structure and thereafter is converged respectively to form a light spot on an information recording plane of the first, second and third optical information recording mediums, and
   wherein in a case that a light flux having a wavelength $\lambda1$ or $\lambda3$ comes into the optical element, when an order number of a diffracted ray having the maximum diffraction efficiency among diffracted rays generated by the first diffractive structure is n1 in the light flux having the wavelength $\lambda1$ and n3 in the light flux having the wavelength $\lambda3$ (n1 and n3 are a natural number respectively), the following formula is satisfied:

$$1.1 \geq (n1 \times \lambda1) / (n3 \times \lambda3) \geq 0.9$$

2. The optical element of claim 1, wherein the order numbers n1 and n3 satisfy the following formula:

$$n1 : n3 = 2 : 1$$

3. The optical element of claim 2, wherein when the optical system magnification of the optical element for the wavelength $\lambda1$ is m1, the following formula is satisfied:

$$m1 = 0$$

4.  The optical element of claim 2, wherein when the optical system magnification of the optical element for the wavelength λ3 is m3, the following formula is satisfied:

$$- 1/12.0 \leq m3 \leq - 1/16.0$$

5.  The optical element of claim 2, wherein when the optical system magnification of the optical element for the wavelength λ3 is m3, the following formula is satisfied:

$$- 1/12.0 \leq m3 \leq - 1/13.4$$

6.  The optical element of claim 2, wherein in a case that a light flux having a wavelength λ2 comes into the optical element, when an order number of a diffracted ray having the maximum diffraction efficiency among diffracted rays generated by the diffractive structure is n2 in the light flux having the wavelength λ2 (n2 is a natural number), the following formula is satisfied:

$$(n2 \times \lambda 2) / (n3 \times \lambda 3) \leq 1$$

7.  The optical element of claim 6, wherein when the optical system magnification of the optical element for the wavelength λ2 is m2, the following formula is satisfied:

$$- 1/12.0 \leq m2 \leq - 1/17.0$$

8.  The optical element of claim 6, wherein when the optical system magnification of the optical element for the wavelength λ2 is m2, the following formula is satisfied:

$$- 1/12.0 \leq m2 \leq - 1/13.4$$

9.  The optical element of claim 7, wherein the second light source to emit a light flux having a wavelength λ2 and the third light source to emit a light flux having a wavelength λ3 are made in a unit.

10. The optical element of claim 2, wherein in a case that a light flux having a wavelength λ2 comes into the optical element, when an order number of a diffracted ray having the maximum diffraction efficiency among diffracted rays generated by the diffractive structure is n2 in the light flux having the wavelength λ2 (n2 is a natural number), the following formula is satisfied:

$$(n1 \times \lambda 1) / (n2 \times \lambda 2) \leq 1$$

11. The optical element of claim 3, wherein when the optical system magnification of the optical element for the wavelength λ2 is m2, the following formula is satisfied:

$$m2 = 0$$

12. The optical element of claim 7, wherein when a wavelength changes to become longer, the diffractive structure has an optical characteristic to make the spherical aberration of a light flux having passed through the diffractive structure to be under.

13. The optical element of claim 11, wherein the first light source to emit a light flux having a wavelength λ1 and the second light source to emit a light flux having a wavelength λ2 are made in a unit.

14. The optical element of claim 2, wherein the optical element is an objective lens.

**15.** The optical element of claim 1, wherein at least one optical surface of the optical element comprises a first region to allow a light flux having any one of wavelength λ, λ2 and λ3 emitted respectively from the first, second and third light sources to pass through so as to conduct recording and/or reproducing for the first, second and third optical information recording mediums respectively, and a second region applied with a dichroic coat to allow a light flux having one of wavelength λ1 and λ2 emitted respectively from the first and second light sources to pass through so as to conduct recording and/or reproducing for the first and second optical information recording mediums respectively and not to allow a light flux having a wavelength λ3 emitted from the third light source to pass through.

**16.** The optical element of claim 15, wherein the diffractive structure is not provided on the optical surface on which the dichroic coat is applied.

**17.** The optical element of claim 1, wherein at least one optical surface of the optical element comprises a first region to allow a light flux having any one of wavelength λ, λ2 and λ3 emitted respectively from the first, second and third light sources to pass through so as to conduct recording and/or reproducing for the first, second and third optical information recording mediums respectively, and a second region to allow a light flux having one of wavelength λ1 and λ2 emitted respectively from the first and second light sources to pass through so as to conduct recording and/or reproducing for the first and second optical information recording mediums respectively and not to allow a light flux having a wavelength λ3 emitted from the third light source to pass through,

wherein the first diffractive structure is provided on the first region and a second diffractive structure is provided on the second region,

wherein when an order number of a diffracted ray having the maximum diffraction efficiency among diffracted rays having the wavelength λ1 generated by the first diffractive structure is n1A, an order number of a diffracted ray having the maximum diffraction efficiency among diffracted rays having the wavelength λ2 generated by the first diffractive structure is n1D, an order number of a diffracted ray having the maximum diffraction efficiency among diffracted rays having the wavelength λ1 generated by the second diffractive structure is n2A, and an order number of a diffracted ray having the maximum diffraction efficiency among diffracted rays having the wavelength λ2 generated by the second diffractive structure is n2D, the following formula is satisfied:

$$n1A : n1D \neq n2A : n2D$$

**18.** The optical element of claim 1, wherein at least one optical surface of the optical element comprises a first region to allow a light flux having any one of wavelength λ, λ2 and λ3 emitted respectively from the first, second and third light sources to pass through so as to conduct recording and/or reproducing for the first, second and third optical information recording mediums respectively, and a second region to allow a light flux having one of wavelength λ1 and λ2 emitted respectively from the first and second light sources to pass through so as to conduct recording and/or reproducing for the first and second optical information recording mediums respectively and not to allow a light flux having a wavelength λ3 emitted from the third light source to pass through,

wherein the first diffractive structure is provided on the first region and a second diffractive structure is provided on the second region,

wherein when an order number of a diffracted ray having the maximum diffraction efficiency among diffracted rays having the wavelength λ1 generated by the first diffractive structure is n1A, an order number of a diffracted ray having the maximum diffraction efficiency among diffracted rays having the wavelength λ2 generated by the first diffractive structure is n1D, an order number of a diffracted ray having the maximum diffraction efficiency among diffracted rays having the wavelength λ1 generated by the second diffractive structure is n2A, and an order number of a diffracted ray having the maximum diffraction efficiency among diffracted rays having the wavelength λ2 generated by the second diffractive structure is n2D, the following formula is satisfied:

$$n1A : n1D = n2A : n2D$$

where n2A is an odd number.

**19.** The optical element of claim 18, wherein n2A = 5 and n2D = 3.

**20.** The optical element of claim 18, wherein n2A = 3 and n2D = 2.

**21.** The optical element of claim 18, wherein the maximum diffraction efficiency among diffracted rays having wavelength λ3 generated by the second diffractive structure is 60% or less.

**22.** The optical element of claim 18, wherein a light flux outgoing from the first light source is achromatism.

**23.** An optical pickup apparatus, comprising:

a first light source having a wavelength λ1,
a second light source having a wavelength λ2 (λ1<λ2),
a third light source having a wavelength λ3 (1.6·λ1 ≤ λ3 ≤ 2.0·λ1 and λ2< λ3), and
a light converging system, wherein the light converging system converges a light flux from the first light source onto an information recording plane of a first optical information recording medium through a protective layer having a thickness t1 so that recording and/or reproducing information is conducted for the first optical information recording medium, converges a light flux from the second light source onto an information recording plane of a second optical information recording medium through a protective layer having a thickness t2 (0.8 · t1 ≤ t2 ≤ 1.2 · t1) so that recording and/or reproducing information is conducted for the second optical information recording medium, and converges a light flux from the third light source onto an information recording plane of a third optical information recording medium through a protective layer having a thickness t3 (1.9 · t1 ≤ t3 ≤ 2.1 · t1) so that recording and/or reproducing information is conducted for the third optical information recording medium, and

wherein the light converging system includes the optical element described in claims 1 to 22.

**24.** The optical pickup apparatus of claim 23, wherein a light flux having a wavelength λ2 comes as a divergent light flux into the optical element and a coupling lens is arranged between the second light source and the optical element.

**25.** The optical pickup apparatus of claim 24, wherein when a boundary line is defined at a position corresponding to a numerical aperture $NA_D$ in a case that information recording and/or reproducing is conducted for the second optical information recording medium and an optical surface of the coupling lens is separated by the boundary line into an inner region closer to the optical axis and an outer region farther from the optical axis, the divergent angle of a light flux having a wavelength λ2 when the light flux have passed through the inner region is different from that when the light flux have passed through the outer region near to the boundary between the inner region and the outer region.

**26.** The optical pickup apparatus of claim 25, wherein the divergent angle of a light flux having a wavelength λ2 when the light flux have passed through the outer region is lager than that when the light flux have passed through the inner region near to the boundary between the inner region and the outer region.

**27.** The optical pickup apparatus of claim 24, wherein a light flux having a wavelength λ3 passes through the coupling lens and thereafter comes into the optical element.

**28.** The optical pickup apparatus of claim 27, wherein when a boundary line is defined at a position corresponding to a numerical aperture $NA_C$ in a case that information recording and/or reproducing is conducted for the third optical information recording medium and an optical surface of the coupling lens is separated by the boundary line into an inner region closer to the optical axis and an outer region farther from the optical axis, the divergent angle of a light flux having a wavelength λ3 when the light flux have passed through the inner region is different from that when the light flux have passed through the outer region near to the boundary between the inner region and the outer region.

**29.** The optical pickup apparatus of claim 25, wherein a diffractive structure is provided on at least one of the inner and outer regions of the coupling lens.

**30.** The optical pickup apparatus of claim 24, wherein when a boundary line is defined at a position corresponding to a numerical aperture $NA_D$ in a case that information recording and/or reproducing is conducted for the second optical information recording medium and an optical surface of the coupling lens is separated by the boundary line into an inner region closer to the optical axis and an outer region farther from the optical axis, a dichroic coat not to allow a light flux having a wavelength λ2 to pass through is applied onto the outer region, and when a boundary line is defined at a position corresponding to a numerical aperture $NA_D$ in a case that information recording and/or reproducing is conducted for the second optical information recording medium and an optical surface of the optical element is separated by the boundary line into an inner region closer to the optical axis and an outer region farther from the optical axis, a dichroic coat not to allow a light flux having a wavelength λ2 to pass through is applied onto the outer region.

31. The optical pickup apparatus of claim 24, wherein a coupling lens is arranged between the third light source and the optical element, when a boundary line is defined at a position corresponding to a numerical aperture $NA_C$ in a case that information recording and/or reproducing is conducted for the third optical information recording medium and an optical surface of the coupling lens is separated by the boundary line into an inner region closer to the optical axis and an outer region farther from the optical axis, a dichroic coat not to allow a light flux having a wavelength λ3 to pass through is applied onto the outer region, and when a boundary line is defined at a position corresponding to a numerical aperture $NA_C$ in a case that information recording and/or reproducing is conducted for the third optical information recording medium and an optical surface of the optical element is separated by the boundary line into an inner region closer to the optical axis and an outer region farther from the optical axis, a dichroic coat not to allow a light flux having a wavelength λ3 to pass through is applied onto the outer region.

32. A coupling lens for use in the optical pickup apparatus described in claim 24, wherein a light flux having a wavelength λ1 passes through the coupling lens and thereafter comes into the optical element.

33. The optical pickup apparatus of claim 23, wherein an aperture limiting element for a light flux having a wavelength λ13 is arranged closer to the light source than the light converging optical system.

34. The optical pickup apparatus of claim 33, wherein the aperture limiting element is a dichroic filter.

35. The optical pickup apparatus of claim 33, wherein the aperture limiting element is a dichroic prism.

36. The optical pickup apparatus of claim 33, wherein the aperture limiting element is a coupling lens.

37. The optical pickup apparatus of claim 33, wherein the aperture limiting element is a phase difference plate.

38. The optical pickup apparatus of claim 23, wherein the third light source is a hololaser.

39. The optical pickup apparatus of claim 23, wherein a first chromatic correcting element to achromatize a light flux having a wavelength λ1 is located on an optical of the light flux having the wavelength λ1.

40. The optical pickup apparatus of claim 39, wherein a second chromatic correcting element to achromatize a light flux having a wavelength λ2 is located on an optical path of the light flux having the wavelength λ2.

41. The optical pickup apparatus of claim 23, wherein a first chromatic correcting element to achromatize a light flux having the wavelength λ1 is located on an optical path on which only the light flux having the wavelength λ1 passes, and a second chromatic correcting element to achromatize a light flux having the wavelength λ2 is located on an optical path on which only the light flux having the wavelength λ2 passes.

42. The optical pickup apparatus of claim 23, wherein a first chromatic correcting element to achromatize a light flux having the wavelength λ1 is located on an optical path on which the light flux having the wavelength λ1 and the light flux having the wavelength λ2 pass in common, and a second chromatic correcting element to achromatize a light flux having the wavelength λ2 is located on an optical path on which only the light flux having the wavelength λ2 passes.

43. The optical pickup apparatus of claim 39, wherein a collimator is located on an optical path on which the light flux having the wavelength λ1 and the light flux having the wavelength λ2 pass in common.

44. The optical pickup apparatus of claim 43, wherein a first beam shaper to shape a light flux having the wavelength λ1 is located at a light source side than the collimator on an optical path on which the light flux having the wavelength λ1 passes.

45. The optical pickup apparatus of claim 44, wherein the first beam shaper corrects chromatic aberration for a light flux having the wavelength λ1.

**46.** The optical pickup apparatus of claim 42, wherein a second beam shaper to shape a light flux having the wavelength $\lambda 2$ is located at a light source side than the collimator on an optical path on which the light flux having the wavelength $\lambda 2$ passes.

**47.** The optical pickup apparatus of claim 46, wherein the second beam shaper corrects chromatic aberration for a light flux having the wavelength $\lambda 2$.

**48.** The optical pickup apparatus of claim 42, wherein a beam shaper to shape a light flux having the wavelength $\lambda 1$ or to shape a light flux having the wavelength $\lambda 2$ is located at a light source side than the collimator on an optical path on which the light flux having the wavelength $\lambda 1$ and the light flux having the wavelength $\lambda 2$ pass in common.

**49.** The optical pickup apparatus of claim 42, wherein the collimator is made of a plastic material.

**50.** The optical pickup apparatus of claim 43, wherein a beam shaping prism to shape a light flux having the wavelength $\lambda 1$ or to shape a light flux having the wavelength $\lambda 2$ is located between the collimator and the light converging optical system on an optical path on which the light flux having the wavelength $\lambda 1$ and the light flux having the wavelength $\lambda 2$ pass in common.

**51.** The optical pickup apparatus of claim 50, wherein the collimator is made of a glass material.

**52.** The optical pickup apparatus of claim 23, wherein a first collimator is located on an optical path on which only a light flux having the wavelength $\lambda 1$ and a second collimator is located on an optical path on which only a light flux having the wavelength $\lambda 2$.

**53.** The optical pickup apparatus of claim 52, wherein at least one collimator of the first and second collimators is made of a plastic material.

**54.** The optical pickup apparatus of claim 53, wherein the at least one collimator made of the plastic material is a chromatic aberration correcting element.

**55.** The optical pickup apparatus of claim 52, wherein a first beam shaper to shape a light flux having the wavelength $\lambda 1$ is located at a light source side than the first collimator on an optical path on which the light flux having the wavelength $\lambda 1$ passes.

**56.** The optical pickup apparatus of claim 55, wherein the first beam shaper is the first chromatic aberration correcting element.

**57.** The optical pickup apparatus of claim 56, wherein a second beam shaper to shape a light flux having the wavelength $\lambda 2$ is located at a light source side than the collimator on an optical path on which the light flux having the wavelength $\lambda 2$ passes.

**58.** The optical pickup apparatus of claim 57, wherein the second beam shaper is the second chromatic aberration correcting element.

**59.** The optical pickup apparatus of claim 53, wherein a first beam shaper to shape a light flux having the wavelength $\lambda 1$ is located between the first collimator and the light converging optical system on an optical path on which the light flux having the wavelength $\lambda 1$ passes.

**60.** The optical pickup apparatus of claim 59, wherein a second beam shaper to shape a light flux having the wavelength $\lambda 2$ is located between the second collimator and the light converging optical system on an optical path on which the light flux having the wavelength $\lambda 2$ passes.

# FIG. 1

SA

UNDER SPHERICAL ABERRATION | OVER SPHERICAL ABERRATION

# FIG. 2

EP 1 411 506 A2

# FIG. 3

FIG. 4

# FIG. 5

EP 1 411 506 A2

FIG. 6

# FIG. 7

EP 1 411 506 A2

EP 1 411 506 A2

# FIG. 8

# FIG. 9

EP 1 411 506 A2

FIG. 10

# FIG. 11

EP 1 411 506 A2

# FIG. 12

EP 1 411 506 A2

# FIG. 13

# FIG. 14

LONGITUDINAL SPHERICAL ABERRATION DIAGRAM

HIGH DENSITY DVD

# FIG. 15

LONGITUDINAL SPHERICAL ABERRATION DIAGRAM  DVD

# FIG. 16

LONGITUDINAL SPHERICAL ABERRATION DIAGRAM     CD

# FIG. 17

FIRST REGION

SECOND REGION